# EUROPEAN PATENT APPLICATION

(11) **EP 2 053 579 A2**
(43) Date of publication of application: **29.04.2009**
(21) Application number: 08253475.1
(22) Date of filing: 24.10.2008
(51) Int. Cl.: G09B 21/00

(54) **Data processing device**

(30) Priority: 24.10.2007 JP 2007276110; 27.11.2007 JP 2007305558
(71) Applicant: Brother Kogyo Kabushiki Kaisha, Nagoya-shi, Aichi-ken 467-8561 (JP)
(72) Inventor: Fujishita, Masahiro, Nagoya-shi, Aichi-ken 467-8562 (JP); Maehira, Hirotoshi, Nagoya-shi, Aichi-ken 467-8562 (JP)
(74) Representative: Smith, Samuel Leonard

(57) **Abstract**

A data processing device includes a displaying unit, a user type determining unit, and a display controlling unit. The display unit displays display data including first display data for visually impaired users and second display data for sighted users. The user type determining unit determines whether a user is visually impaired or sighted. The display controlling unit controls the displaying unit to display the first display data when the user type determining unit determines that the user is visually impaired, and to display the second display data when the user type determining unit determines that the user is sighted.

## Description

### CROSS REFERENCE TO RELATED APPLICATION

This application claims priorities from Japanese Patent Application Nos. 2007-276110 filed October 24, 2007 and 2007-305558 filed November 27, 2007. The entire content of each of these priority applications is incorporated herein by reference.

### TECHNICAL FIELD

The present invention relates to a data processing device and a data processing system.

### BACKGROUND

Conventional data processing programs called screen readers function to convert text data displayed on a personal computer (hereinafter abbreviated as "PC") to voice that can be played audibly in order to assist people with visual impairments in using ordinary PCs. One such data processing program designed to support the visually impaired in using a PC is disclosed in Japanese unexamined patent application publication No. 2002-288071. This program provides a display area within the operation screen of a browser that acquires and displays World Wide Web (WWW) data. The display area is used to display menus with links or other data, enabling the visually impaired users to acquire WWW data through simple operations. When the browser acquires menu data for the visually impaired user in addition to the WWW data, the program can display this menu data in the operation screen of the browser, making the browser more user-friendly to the visually impaired user.
The browser voices the menu data for the visually impaired user displayed in the browser window, while the screen reader voices the WWW data.

However, in the technology of Japanese unexamined patent application publication No. 2002-288071, menu items for the visually impaired user displayed in the browser are also included with the WWW data displayed on the browser. Accordingly, the user hears the same data repeated by the browser and the screen reader, making it more difficult to understand what information is displayed in the operation screen of the browser. Alternatively, if the browser were provided with both an operation screen for the visual impaired that is convenient for people with visual impairments and an operation screen for the visually sound, or sighted, that is convenient for sighted people, the user would be required to perform operations to select or toggle the operation screen to the desired screen. This is particularly inconvenient for visually impaired users for which each operation is time-consuming.

### SUMMARY

In view of the foregoing, it is an object of the present invention to provide a data processing device capable of displaying an operation screen that is user-friendly to the visually impaired user from among a plurality of operation screens, including a screen for the visually impaired users and a screen for the sighted users.

In order to attain the above and other objects, the invention provides a data processing device including a displaying unit, a user type determining unit, and a display controlling unit. The display unit displays display data including first display data for visually impaired users and second display data for sighted users. The user type determining unit determines whether a user is visually impaired or sighted. The display controlling unit controls the displaying unit to display the first display data when the user type determining unit determines that the user is visually impaired, and to display the second display data when the user type determining unit determines that the user is sighted.

According to another aspect, the present invention provides a data processing method including: determining whether a user is visually impaired or sighted; and displaying first display data for visually impaired users when the user is determined to be visually impaired, and second display data for sighted users when the user is determined to be sighted.

According to another aspect, the present invention provides a computer-readable recording medium that stores a data processing program, the data processing program including instructions for: determining whether a user is visually impaired or sighted; and displaying first display data for visually impaired users when the user is determined to be visually impaired, and second display data for sighted users when the user is determined to be sighted.
According to another aspect, the present invention provides a data processing system including a first data processing device and a second data processing device. The first data processing device includes a displaying unit that displays display data including first display data for visually impaired users and second display data for sighted users. The second data processing device includes a user type determining unit and a display controlling unit. The user type determining unit determines whether a user is visually impaired or sighted. The display controlling unit controls the displaying unit to display the first display data when the user type determining unit determines that the user is visually impaired, and to display the second display data when the user type determining unit determines that the user is sighted.

### BRIEF DESCRIPTION OF THE DRAWINGS

The particular features and advantages of the invention as well as other objects will become apparent from the following description taken in connection with the accompanying drawings, in which:
FIG. 1 is a block diagram showing the electrical structure of a PC according to a first embodiment of the present invention;
FIG. 2A is a screenshot showing an example of a UI for the visually impaired user;
FIG. 2B is a screenshot showing an example of a UI for the sighted user;
FIG. 3A is a flowchart illustrating steps in an initial settings process performed on the PC;
FIG. 3B is a screenshot showing an example of a dialog box;
FIG. 4 is a flowchart illustrating steps in a main process performed on the PC;
FIG. 5 is a flowchart illustrating steps in a user type determination process;
FIG. 6A is a flowchart illustrating steps in a usage status acquisition process;
FIG. 6B is a flowchart illustrating steps in an operation acquisition process;
FIG. 7 is a flowchart illustrating steps in a screen toggling process A;
FIG. 8 is a flowchart illustrating steps in a screen toggling process B;
FIG. 9A is a screenshot showing an example of a dialog box for the visually impaired user;
FIG. 9B is a screenshot showing an example of a dialog box for the sighted user;
FIG. 10 is a flowchart illustrating steps in a usage status acquisition process according to a first variation of the first embodiment;
FIG. 11A is a flowchart illustrating steps in a usage status acquisition process according to a second variation of the first embodiment;
FIG. 11B is a flowchart illustrating steps in an operation acquisition process according to a third variation of the first embodiment;
FIG. 11C is a flowchart illustrating steps in an operation acquisition process according to a fourth variation of the first embodiment;
FIG. 12 is a flowchart illustrating steps in a user type determination process according to a fifth variation of the first embodiment;
FIG. 13A is a screenshot showing an example of a UI for the visually impaired user displayed on the LCD;
FIG. 13B is a screenshot showing an example of a UI for the sighted displayed user on the LCD;
FIG. 14A is a flowchart illustrating steps in a function execution process A performed by a PC according to a second embodiment;
FIG. 14B is a screenshot showing an example of a scanner function operation screen for the visually impaired user displayed on the LCD;
FIG. 15A is a flowchart illustrating steps in a function execution process B according to the second embodiment;
FIG. 15B is a screenshot showing an example of a scanner function operation screen for the sighted displayed user displayed on the LCD;
FIG. 16A is a block diagram showing the electrical structure of a PC according to a third embodiment;
FIG. 16B is a flowchart illustrating steps in a user type monitoring process executed by the PC according to the third embodiment; and
FIG. 17 is a flowchart illustrating steps in an application starting process executed by the PC according to the third embodiment.

### DETAILED DESCRIPTION

A data processing device according to embodiments of the invention will be described while referring to the accompanying drawings wherein like parts and components are designated by the same reference numerals to avoid duplicating description.

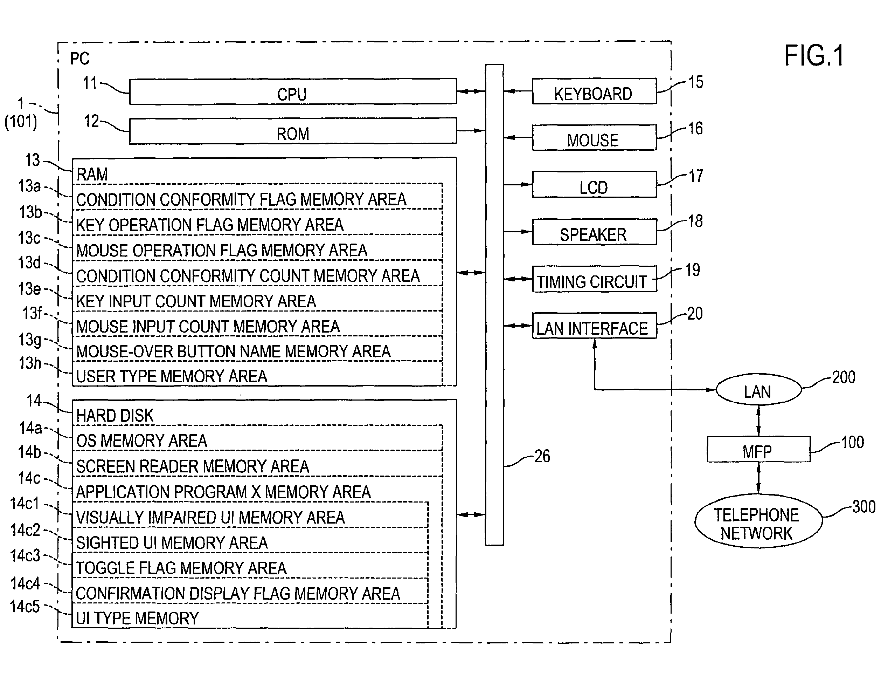

First, a data processing device according to a first embodiment of the invention will be described while referring to FIG. 1 through 9B.

In the first embodiment, an application program X is installed on a PC 1. The application program X has a screen toggling function for automatically toggling between these operation screens for the visually impaired user and for the sighted user. When running, the application program X functions to determine whether a user of the PC 1 is visually impaired or sighted and switches its operation screen to a screen appropriate for the user.

FIG. 1 is a block diagram showing the electrical structure of the PC 1 according to the first embodiment is installed.

When the application program X described above is operating on the PC 1 and the operation screen convenient for the sighted user is displayed, the application program X can toggle the operation screen to a screen useful for the visually impaired user when the user performs input operations. This configuration is convenient for visually impaired users since each operation is time-consuming for such users.

The application program X is a program capable of using various functions possessed by a multifunction peripheral (MFP) 100 connected to the PC 1 via a LAN 200, including a facsimile function, printer function, scanner function, and copier function. The MFP 100 is also connected to a telephone network 300 required for transmitting data with the facsimile function.

The PC 1 is primarily configured of a CPU 11, a ROM 12, a RAM 13, a hard disk 14, a keyboard 15, a mouse 16, an LCD 17, a speaker 18, a timing circuit 19, and a LAN interface 20, all of which components are interconnected via a bus line 26.

The CPU 11 functions to control the various functions possessed by the PC 1 and each component connected to the bus line 26 based on fixed values and programs stored on the ROM 12, RAM 13, and hard disk 14 or according to signals exchanged via the LAN interface 20.

The ROM 12 is a non-rewritable memory storing control programs executed on the PC 1. The RAM 13 is a rewritable volatile memory used to temporarily store various data when the CPU 11 executes operations on the PC 1.

The RAM 13 is provided with a condition conformity flag memory area 13a, a key operation flag memory area 13b, a mouse operation flag memory area 13c, a condition conformity count memory area 13d, a key input count memory area 13e, a mouse input count memory area 13f, a mouse-over button name memory area 13g, and a user type memory area 13h.

The condition conformity flag memory area 13a stores a condition conformity flag indicating whether user settings on the PC 1 indicate settings for aiding the visually impaired user. PC settings designed to aid the visually impaired user might include settings performed when installing software designed to aid the visually impaired user in using the PC and settings in the operating system (hereinafter abbreviated as "OS") for reducing the speed of the mouse cursor or increasing the size of text displayed on the LCD 17, for example. The condition conformity flag is set to "on" ("1", for example) when the above conditions are met, and "off" ("0", for example) when the above conditions are not met or when the flag is initialized.

The key operation flag memory area 13b stores a key operation flag indicating whether the user has performed a prescribed key operation (has pressed a key, for example) on the keyboard 15. The key operation flag is set to "on" ("1", for example) when the user has performed a prescribed key operation on the keyboard 15 and "off" ("0", for example) when a prescribed key operation has not been performed or when the flag is initialized.

The mouse operation flag memory area 13c stores a mouse operation flag indicating whether the user has performed a prescribed mouse operation (mouse click, for example) on the mouse 16. The mouse operation flag is set to "on" ("1", for example) when the user has performed a prescribed mouse operation on the mouse 16, or "off" ("0", for example) when a prescribed mouse operation has not been performed or when the flag is initialized.

The condition conformity count memory area 13d stores a count indicating the number of user settings on the PC 1 performed to aid a user who is visually impaired. For example, the count stored in the condition conformity count memory area 13d is incremented by "1" for each user setting on the PC designed to aid the visually impaired user, including the installation of software designed to aid the visually impaired person in using the PC, an OS setting to reduce the mouse cursor speed, or an OS setting to increase the size of text displayed on the LCD 17.

The key input count memory area 13e stores a count indicating the number of times the operator has performed a prescribed key operation on the keyboard 15. The count in the key input count memory area 13e is incremented by "1" each time the user performs a prescribed key operation on the keyboard 15, for example.

The mouse input count memory area 13f stores a count indicating the number of times the user has performed a prescribed mouse operation on the mouse 16. The count stored in the mouse input count memory area 13f is incremented by "1" each time the user performs a prescribed mouse operation, for example.

The mouse-over button name memory area 13g stores the names of prescribed buttons displayed on the LCD 17 that a mouse cursor passes over in the order that they is passed. For example, when the mouse cursor passes over a button assigned the button name "Scan," the button name "Scan" is stored in the mouse-over button name memory area 13g. If the mouse cursor subsequently passes over a button assigned the button name "Copy," the button name "Copy" is stored in addition to "Scan" in the order that they is passed.

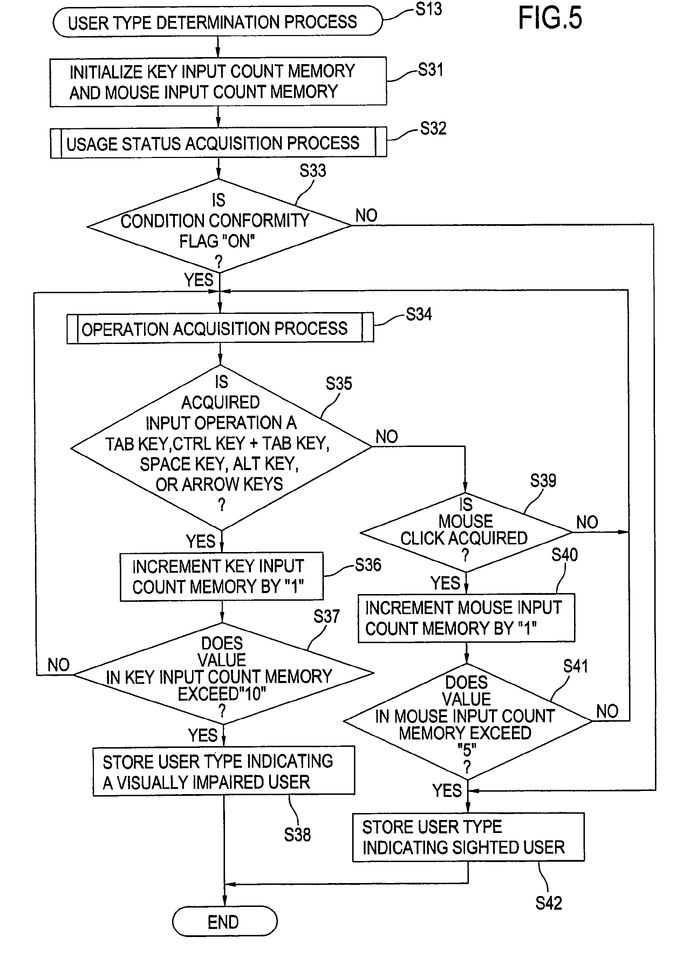

The user type memory area 13h stores a user type indicating whether the user is visually impaired or sighted. The type of user operating the PC 1 is determined according to a user type determination process described later with reference to FIG. 5. If the user is determined to be a visually impaired user in this process, a user type indicating the user is visually impaired ("1", for example) is stored in the user type memory area 13h. If the operator is determined to be a sighted user, a user type indicating a sighted user ("2", for example) is stored in the user type memory area 13h. The user type memory area 13h is initialized to "0".

The hard disk 14 is a rewritable, nonvolatile memory. Hence, data stored on the hard disk 14 is preserved even after the power supply to the PC 1 is turned off. The hard disk 14 is provided with an OS memory area 14a, a screen reader memory area 14b, and an application program X memory area 14c.

The OS memory area 14a stores the OS and OS settings. The OS is a base program designed to manage components connected to the bus line 26 and is required when the operator uses the PC 1. For example, the OS manages the entire display area of the LCD 17 described later. The OS is provided with a plurality of setting options related to input operations, as will be described later. By selecting one of the multiple choices provided for each setting, the user can customize the PC 1 for a more pleasant experience. A program running on the PC 1 can display text, images, and the like within a restricted display region on the LCD 17 allowed by the OS. For example, the user can set the speed of the mouse cursor displayed on the LCD 17 faster or slower than a prescribed default speed and can set the size of text data displayed on the LCD 17 larger or smaller than a prescribed default text size.

Hence, when a program running on the PC 1 displays text or images on the LCD 17, the program must first request the OS to allocate a display region of the desired size. Hereafter, the display region of the desired size allocated (allowed) by the OS will be referred to as a window, and each program will be said to acquire a window from the OS when the OS allocates the window. When a program running on the PC 1 acquires a window from the OS, the program can freely display text and images within the limits of the window.

Whether there is a plurality of programs running on the PC 1, each of which programs has acquired a window, or a single program that has acquired a plurality of windows, the OS manages each window independently so that each window can be displayed on the LCD 17.

When a program is terminating execution after acquiring a window or when a window acquired from the OS becomes unnecessary, the program can erase the window from the LCD 17 by returning the acquired window to the OS. Hereafter, the act of returning a window to the OS to erase the window from the LCD 17 will be referred to as closing a window.

The OS is also provided with a plurality of setting options related to input operations, as will be described below. By selecting one of the multiple choices provided for each setting, the user can customize the PC 1 for a more pleasant experience.

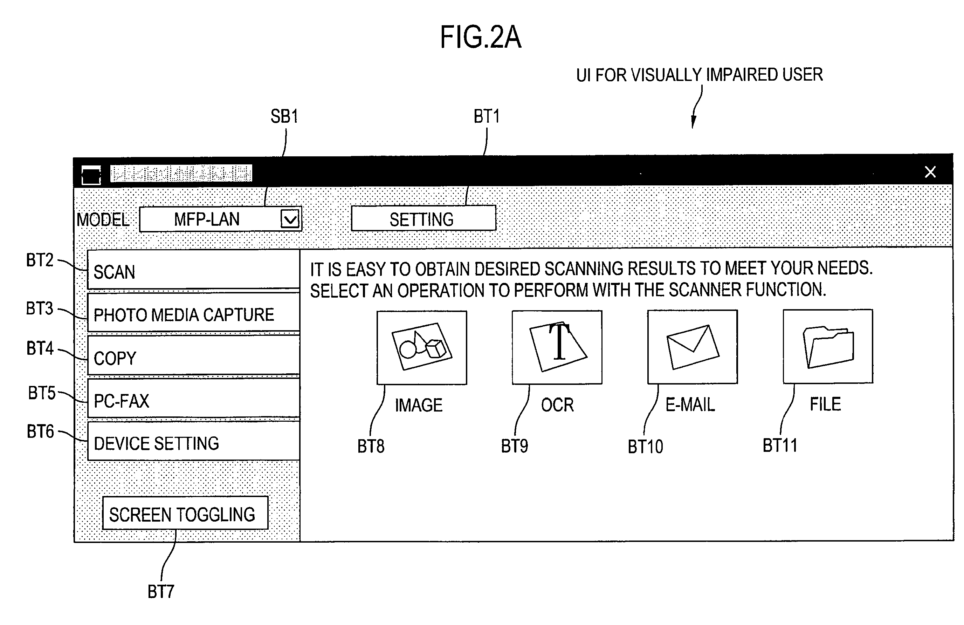

The screen reader memory area 14b stores a screen reader (voicing software) designed to convert text data displayed on the LCD 17 to voice. A screen reader functions to assist a visually impaired user. When the user performs a key operation to select text data displayed on the LCD 17, the screen reader converts the selected text data to voice signals and outputs the voice signals through the speaker 18. For example, if the user selects one of buttons BT1-BT11 (described later in greater detail with reference to FIG. 2A) displayed on the LCD 17, the screen reader converts the button name of the selected button to voice signals and audibly outputs the voice signals, enabling a visually impaired person to operate the PC 1 based on voice.

The application program X memory area 14c stores the application program X, which facilitates use of functions on the MFP 100 connected to the PC 1 via the LAN 200. Since the screen reader runs simultaneously when the visually impaired user uses the application program X, the screen reader can convert text data displayed in an operation screen of the application program X to voice data that is outputted through the speaker 18. Accordingly, the visually impaired user can operate the application program X based on the voice.

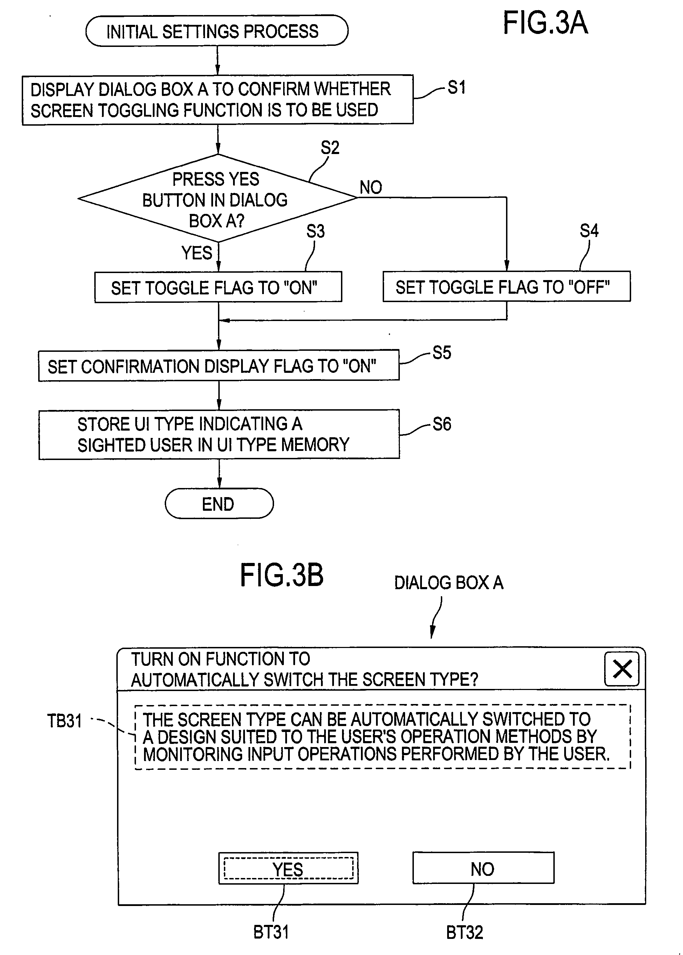

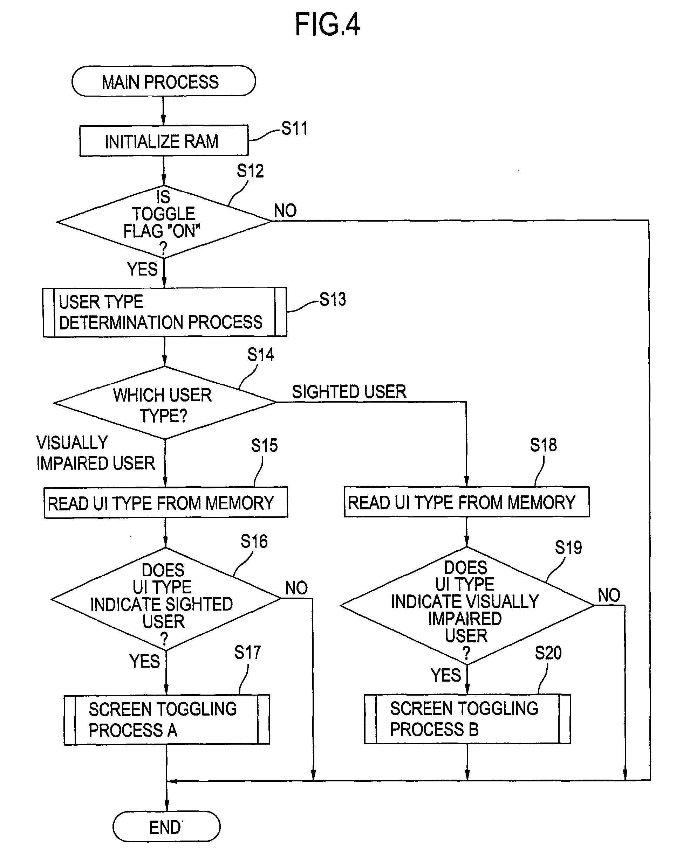

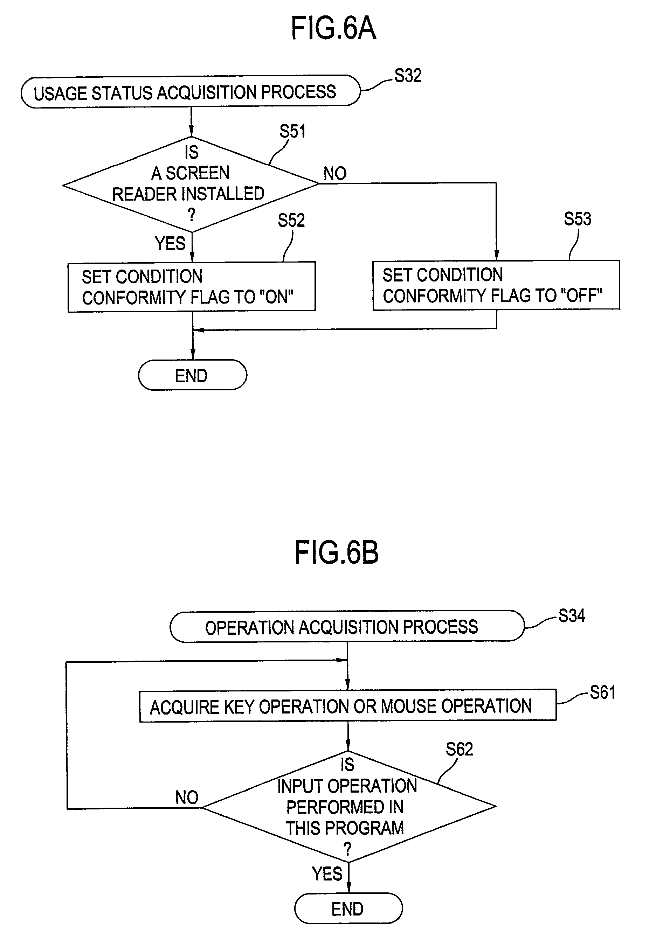

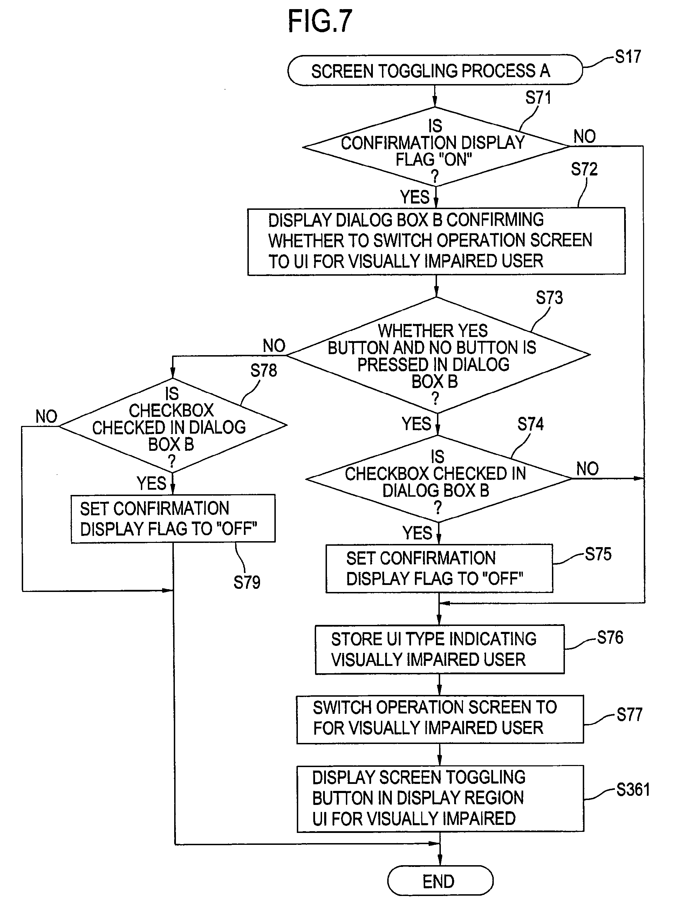

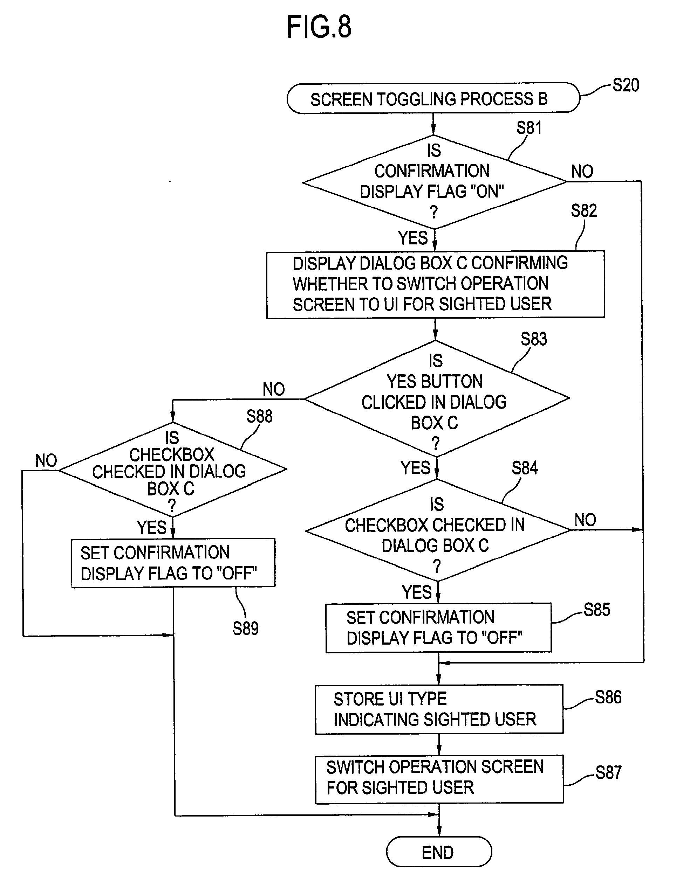

The application program X memory area 14c stores programs for implementing an initial settings process shown in the flowchart of FIG. 3A, a main process shown in the flowchart of FIG. 4, the user type determination process shown in the flowchart of FIG. 5, a usage status acquisition process shown in the flowchart of FIG. 6A, an operation acquisition process shown in the flowchart of FIG. 6B, a screen toggling process A shown in the flowchart of FIG. 7, and a screen toggling process B shown in the flowchart of FIG. 8.

The application program X memory area 14c is provided with a visually impaired UI memory area 14c1, a sighted UI memory area 14c2, a toggle flag memory area 14c3, a confirmation display flag memory area 14c4, and a UI type memory area 14c5.

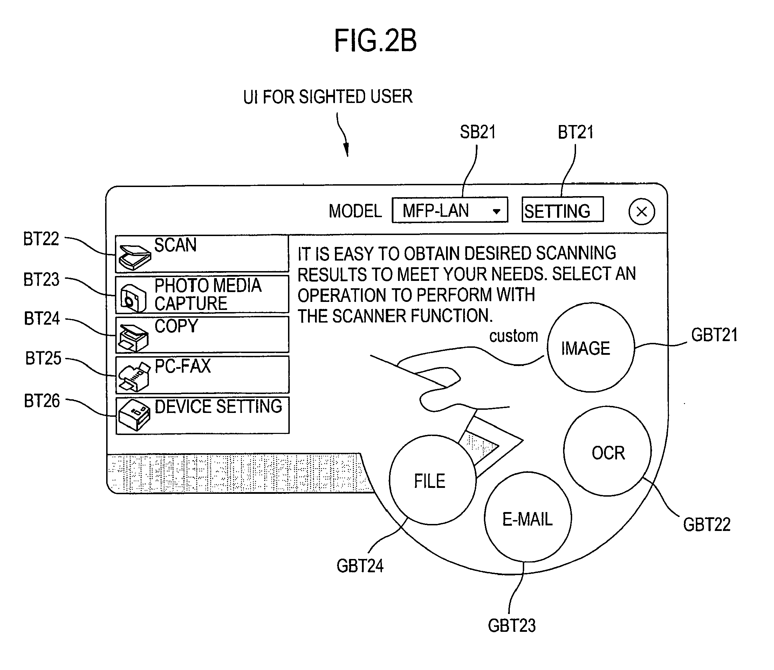

The visually impaired UI memory area 14c1 stores a user interface (UI) for the visually impaired user (described later in greater detail with reference to FIG. 2A), which is an operation screen that facilitates input operations for the visually impaired users. The sighted UI memory area 14c2 stores a UI for the sighted user (described later in greater detail with reference to FIG. 2B), which is an operation screen that facilitates input operations for a sighted user.

The toggle flag memory area 14c3 stores a toggle flag indicating whether to toggle the operation screen displayed on the LCD 17 to the UI for the visually impaired user or the UI for the sighted user based on characteristics of the user's input operations. The operation screen displayed on the LCD 17 is switched to the UI for the visually impaired user or the UI for the sighted user based on characteristics of the input operations when the toggle flag is set to "on" ("1", for example). The operation screen displayed on the LCD 17 is not changed if the toggle flag is set to "off" ("0", for example).

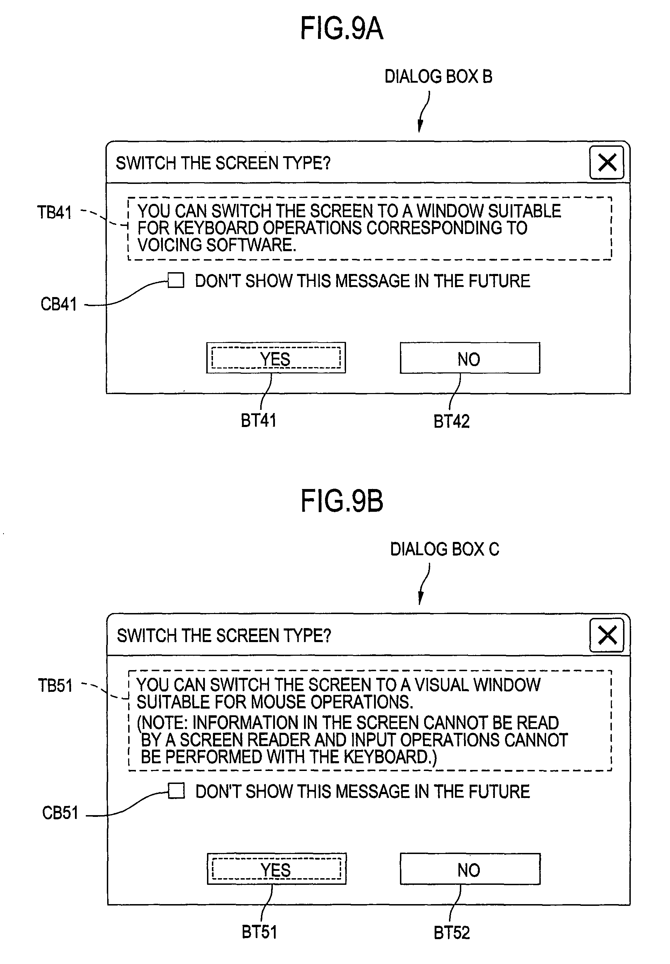

The confirmation display flag memory area 14c4 stores a confirmation display flag indicating whether to display one of dialog boxes described later with reference to FIG. 9 on the LCD 17 to confirm whether the user wishes to switch the operation screen before switching the operation screen on the LCD 17 based on characteristics of input operations.

When switching the operation screen displayed on the LCD 17 based on characteristics of the user's input operations, the dialog box B or C (see FIG. 9) for confirming that the user wishes to switch the operation screen is displayed on the LCD 17 if the confirmation display flag is set to "on" ("1", for example). The operation screen is subsequently switched if the operator inputs an instruction to switch the screen. However, if the confirmation display flag is set to "off" ("0", for example), the dialog box B or C is not displayed to confirm whether the user wishes to switch the operation screen, and the operation screen displayed on the LCD 17 is switched regardless of input from the operator.

The UI type memory area 14c5 stores a UI type indicating whether the UI for the visually impaired user or the UI for the sighted user should be displayed on the LCD 17. The UI for the visually impaired user is displayed on the LCD 17 when the UI type memory area 14c5 stores a user type indicating the UI for the visually impaired user ("1", for example), and the UI for the sighted is displayed on the LCD 17 when the UI type memory area 14c5 stores a UI type indicating the UI for the sighted user ("2", for example).
The user type stored in the UI type memory area 14c5 is initially set to "0". In other words, when the application program X is launched, the operation screen corresponding to the UI type stored in the UI type memory area 14c5 is displayed on the LCD 17.

The keyboard 15 is an input device having a plurality of keys. When the operator presses these keys, input signals corresponding to the pressed keys are inputted into the PC 1. The mouse 16 is a pointing device used to indicate display positions with a mouse cursor displayed on the LCD 17. When the user moves the position of the mouse cursor with the mouse 16, an input signal corresponding to the amount of movement is inputted into the PC 1 and the display position of the mouse cursor is moved based on the input signal.

The mouse 16 has a mouse button that the user can operate while moving the position of the mouse cursor. When the user operates this button, a prescribed input signal is inputted into the PC 1. By operating the keyboard 15 and the mouse 16, the user can modify various settings in the OS and the like and can use the application program X and the like.

The LCD 17 functions to display operating procedures and the process status during the execution of operations, as well as data corresponding to keys pressed on the keyboard 15 and operations performed with the mouse 16. The speaker 18 outputs voice signals provided by the screen reader as voice. The timing circuit 19 is a circuit well known in the art having a timing function for maintaining the current time and date.

The LAN interface 20 is a circuit well known in the art for facilitating data communications with various external devices connected to the LAN 200 by connecting one end of a LAN cable to a connection port of the LAN interface 20 and the other end to the LAN 200.

Next, the UI for the visually impaired user and the UI for the sighted user will be described with reference to FIGs. 2A and 2B.

The UI for the visually impaired user and the UI for the sighted user are operation screens of the application program X. One of these operation screens is displayed on the LCD 17 while the application program X is running. By performing input operations according to the UI for the visually impaired user or the UI for the sighted user, the user can use various functions of the MFP 100.

To display one of the operation screens on the LCD 17, the application program X acquires a window from the OS corresponding to the shape of the operation screen and displays the operation screen in the acquired window. By performing input operations conforming to the UI for the visually impaired or the UI for the sighted displayed in this window on the LCD 17, the user can use functions of the MFP 100.

FIG. 2A is a screenshot showing an example of the UI for the visually impaired user stored in the visually impaired UI memory area 14c1, and FIG. 2B is a screenshot showing an example of the UI for the sighted user stored in the sighted UI memory area 14c2. The UI for the visually impaired user has a limited number of images and a large amount of text data and enables a visually impaired user to perform all operations using a screen reader.

As shown in FIG. 2A, in the upper region of the UI for the visually impaired user are provided a selection box SB1 in which is displayed text data indicating MFPs 100 that can be used with the application program X, and a settings button BT1 for setting various options in the application program X.

On the left side, the UI for the visually impaired user has a Scan button BT2 for using the scanner function on the MFP 100, a Photo Media Capture button BT3 for using the photo media capture function on the MFP 100, a Copy button BT4 for using the copy function on the MFP 100, a PC-FAX button BT5 for using the PC-FAX function on the MFP 100, a Device Settings button BT6 for setting various operations in the MFP 100, and a Screen Toggling button BT7 for toggling the operation screen displayed on the LCD 17 to the UI for the sighted user.

In the center area, the UI for the visually impaired user includes an Image button BT8 for displaying on the LCD 17 image data files scanned using the scanner function, an OCR button BT9 for using an OCR function to create a text data file based on an image data file scanned with the scanner function, an E-mail button BT10 for transmitting e-mail, and a File button BT11 for displaying on the LCD 17 various files stored in the hard disk 14.

The Device Settings button BT6 is provided for performing various settings in the MFP 100. The Screen Toggling button BT7 is provided for toggling the operation screen displayed on the LCD 17 to the UI for the sighted user. While part of the UI for the visually impaired user, the Screen Toggling button BT7 is displayed on the LCD 17 when performing the process of S80 in the screen toggling process A described later (see FIG. 7).

By providing the Screen Toggling button BT7 in the UI for the visually impaired user, a sighted user can switch the UI for the visually impaired user displayed on the LCD 17 to the UI for the sighted user by operating this Screen Toggling button BT7, without waiting for the CPU 11 to determine whether the operator of the PC 1 is visually impaired or sighted in the main process of FIG. 4 described later. Hence, the addition of this button is convenient for a sighted user.

In the first embodiment, the button name displayed on the Screen Toggling button BT7 is formed of an image so that a screen reader cannot voice the name. Hence, the existence of the Screen Toggling button BT7 is not announced to a visually impaired user. Therefore, since a visually impaired user cannot recognize the Screen Toggling button BT7, it is unlikely that a visually impaired user will perform an input operation on the Screen Toggling button BT7 to switch the UI for the visually impaired user to the UI for the sighted user. Accordingly, this configuration reduces the risk of a visually impaired user mistakenly switching the UI for the visually impaired to the UI for the sighted on the LCD 17.

Further, the Screen Toggling button BT7 is configured to accept only input operations via the mouse 16. Since visually impaired users have difficulty performing input operation with the mouse 16, it is unlikely that a visually impaired user will perform an input operation on the Screen Toggling button BT7 to switch the UI for the visually impaired user displayed on the LCD 17 to the UI for the sighted user. Accordingly, this configuration reduces the chance of a visually impaired user mistakenly switching the UI for the visually impaired user to the UI for the sighted user.

In the first embodiment, the button name "Settings" has been assigned to the Settings button BT1, "Scan" to the Scan button BT2, "Photo Media Capture" to the Photo Media Capture button BT3, "Copy" to the Copy button BT4, "PC-FAX" to the PC-FAX button BT5, "Device Settings" to the Device Settings button BT6, "Screen Toggle" to the Screen Toggling button BT7, "Image" to the Image button BT8, "OCR" to the OCR button BT9, "E-mail" to the E-mail button BT10, and "File" to the File button BT11.

The screen reader can convert button names for all buttons BT1-BT11 and all text displayed in the selection box SB1 provided on the UI to voice signals in order to aid a visually impaired user in performing input operations.

With the UI for the visually impaired user described above, the user can operate the buttons BT1-BT11 and the selection box SB1 using the keyboard 15 and mouse 16 to use functions on the MFP 100. Here, the user first must perform an operation to identify one of the buttons BT1-BT11 or the selection box SB1 as an operation target and subsequently must input an instruction to execute an operation.

The buttons BT1-BT11 or selection box SB1 that has been identified as the operation target, i.e., the button or box that has been put in a state for which an execution instruction can be inputted, is referred to as the "input focus". The input focus is said to have shifted when a different button BT1-BT11 or selection box SB1 is specified. When the input focus has been set to one of the buttons BT1-BT11 or the selection box SB1, a rectangular box referred to as a cursor is displayed along the outline of the button or box set as the input focus, enabling the user to discern which of the buttons or box has been set as the input focus.

For example, when performing input operations with the keyboard 15, the user performs an identification operation by pressing the Tab key provided on the keyboard 15. Each time the user presses the Tab key, the input focus moves one at a time through the buttons BT1-BT11 and the selection box SB1 in a prescribed sequence. The user repeatedly presses the Tab key until the input focus has reached the desired button or box. When the desired input focus has been set, the user presses the Return key to execute the operation of the buttons BT1-BT11 or selection box SB1 selected as the input focus. To simplify the description, it will be assumed hereafter that an execution instruction inputted for a button displayed on the LCD 17 denotes that this button was pressed, regardless of which UI for the visually impaired user is displayed (even in the case of the dialog box A described later with reference to FIG. 3B, for example) or whether the input operation was performed with the keyboard 15 or mouse 16.

Each time the input focus is set to one of the buttons BT1-BT11 or the selection box SB1, the screen reader converts the button name for the buttons BT1-BT11 or the text data displayed in the selection box SB1 that has been set to the input focus to voice outputted from the speaker 18.

When an identification operation is performed using the mouse 16, the identification operation and execution instruction are performed simultaneously. For example, by moving the display position of the mouse cursor displayed on the LCD 17 over the display position of one of the buttons BT1-BT11 or the selection box SB1 and pressing the mouse button (referred to as a "mouse click"), the user can perform an identification operation and input an execution instruction for the specified buttons BT1-BT11 or selection box SB1.

Next, the UI for the sighted user will be described with reference to FIG. 2B. FIG. 2B is a screenshot showing an example of a UI for the sighted user, which is an operation screen of the application program X. By performing input operations based on the UI for the sighted user, the user can use various functions of the MFP 100. The UI for the sighted user is also configured so that the user can perform input operations with the mouse 16 on various images. Input operations performed using the mouse 16 can be completed in fewer steps than with the keyboard 15. Hence, a sighted user can perform input operations more easily with the mouse 16 than with the keyboard 15.

In the top region of the UI for the sighted user are provided a selection box SB21 in which the MFPs 100 that can be used by the application program X are displayed as text data, and a Settings button BT21 for setting various options in the application program X.

On the left side, the UI for the sighted user is provided with a Scan button BT22 for using the scanner function in the MFP 100, a Photo Media Capture button BT23 for using the photo media capture function in the MFP 100, a Copy button BT24 for using the copy function in the MFP 100, a PC-FAX button BT25 for using the PC-FAX function in the MFP 100, and a Device Settings button BT26 for setting options in the MFP 100.

On the right side, the UI for the sighted user is provided with an Image graphical button GBT21 for displaying image data files and the like of images scanned with the scanner function on the LCD 17, an OCR graphical button GBT22 for using the OCR function to create a text data file based on an image data file for an image scanned with the scanner function, an E-mail graphical button GBT23 for transmitting e-mail, and a File graphical button GBT24 for displaying various files stored in the hard disk 14 on the LCD 17.

In the first embodiment, the button name "Settings" has been assigned to the Settings button BT21, "Scan" to the Scan button BT22, "Photo Media Capture" to the Photo Media Capture button BT23, "Copy" to the Copy button BT24, "PC-FAX" to the PC-FAX button BT25, "Device Settings" to the Device Settings button BT26, "Image" to the Image graphical button GBT21, "OCR" to the OCR graphical button GBT22, "E-mail" to the E-mail graphical button GBT23, and "File" to the File graphical button GBT24.

The screen reader is configured to convert button names of the buttons BT21-BT26 and text data displayed in the selection box SB21 provided in the UI for the sighted user into voice signals. However, since the graphical buttons GBT21-GBT24 are configured of images, the screen reader cannot convert this data to voice signals.

Accordingly, a visually impaired user would have difficulty performing input operations on the graphical buttons GBT21-GBT24. Consequently, if an input operation is performed on one of the graphical buttons GBT21-GBT24, it can be assumed that a sighted user has performed the input operation.

In other words, since the existence of the graphical buttons GBT21-GBT24 is not announced to the visually impaired user, it is difficult for the visually impaired user to recognize the graphical buttons GBT21-GBT24 and, therefore, unlikely that the user would perform an input operation on one of these graphical buttons. Consequently, if an input operation is performed on one of the graphical buttons GBT21-GBT24, it can be assumed that a sighted user has performed the input operation.

Since the method of using the keyboard 15 or mouse 16 to perform an identification operation to identify one of the buttons BT21-BT26 or the selection box SB21 or to input an execution instruction is identical to the method described in reference to the UI for the visually impaired user, a description of this method will not be repeated.

Further, the graphical buttons GBT21-GBT24 cannot be identified through an operation on the keyboard 15. In other words, an identification operation and an execution instruction can only be inputted for the graphical buttons GBT21-GBT24 by moving the display position of the mouse cursor on the LCD 17 over the display position of the desired graphical button GBT21-GBT24 and performing a mouse click.

Since a visually impaired user would have difficulty performing an input operation using the mouse 16, any input operation performed on the graphical buttons GBT21-GBT24 can be considered with greater certainty to be an input operation performed by a sighted user.

Next, an initial settings process executed by the CPU 11 of the PC 1 will be described with reference to FIG. 3A. FIG. 3A is a flowchart illustrating steps in the initial settings process.

The initial settings process of S10 is performed to set a toggle flag according to a user input operation and to initialize the confirmation display flag and UI type. The CPU 11 executes the initial settings process when the application program X is stored in the application program X memory area 14c.

In S1 of the initial settings process, the CPU 11 displays a dialog box A on the LCD 17 prompting the user to confirm whether to use the screen toggling function for switching to the operation screen best suited to the user based on various user settings for the PC 1 and characteristics of input operations. The dialog box A will be described here with reference to FIG. 3B.

A dialog box is an operation screen for displaying a message requesting the user to input instructions for a process about to be executed, for displaying a message requesting confirmation from the user, and for receiving input from the user in response to these messages. In this initial settings process, the CPU 11 acquires a window from the OS and displays the dialog box A in the acquired window.

FIG. 3B is a screenshot showing an example of the dialog box A. The dialog box A is a window displaying a message prompting the user to confirm whether to use the screen toggling function by inputting an instruction.

The dialog box A is provided with a text box TB31 in which a message is displayed prompting the user to confirm whether to use the screen toggling function, a button BT31 with which the user can input an instruction to use the screen toggling function, and a button BT32 with which the user can input an instruction not to use the screen toggling function.

The text box TB31 includes the text data "The screen type can be automatically switched to a design suited to the user's operation methods by monitoring input operations performed by the user," for example. In addition, a button name "Yes" is assigned to the button BT31 and a button name "No" is assigned to the button BT32.

The screen reader is configured to convert the text data displayed in the text box TB31 and the button names for the buttons BT31 and BT32 provided in the dialog box A to voice signals facilitating input operations for both a sighted and visually impaired user.

The toggle flag stored in the toggle flag memory area 14c3 is set to "on" when the user selects the button BT31 with an input operation and is set to "off" when the user selects the button BT32. After one of the buttons BT31 and BT32 is selected, the window in which the dialog box A is displayed is closed.

Returning to the flowchart in FIG. 3A, in S2 the CPU 11 determines whether the user has performed an operation to press the Yes button BT31 in the dialog box A displayed on the LCD 17. If the Yes button BT31 is pressed (S2: YES), in S3 the CPU 11 sets the toggle flag stored in the toggle flag memory area 14c3 to "on." However, if the No button BT32 is pressed (S2: NO), in S4 the CPU 11 sets the toggle flag to "off."

If the toggle flag has been set to "on," the CPU 11 switches the operation screen displayed on the LCD 17 to the UI for the visually impaired user or the UI for the sighted user based on characteristics of the user's input operations. However, if the toggle flag has been set to "off," the CPU 11 does not change the operation screen displayed on the LCD 17.

In S5 the CPU 11 initializes the confirmation display flag stored in the confirmation display flag memory area 14c4 to "on" and in S6 stores the UI type indicating a sighted user ("2" in the first embodiment) in the UI type memory area 14c5. Subsequently, the CPU 11 ends the initial settings process.

Hence, the CPU 11 displays the UI for the visually impaired user on the LCD 17 when the UI type stored in the 14c5 indicates a UI for the visually impaired user and displays the UI for the sighted user on the LCD 17 when the UI type indicates a UI for the sighted user.

Through the initial settings process shown in FIG. 3A, the CPU 11 can set the toggle flag according to an input operation performed by the user and can initialize the confirmation display flag and the value of the UI type when the application program X is installed on the hard disk 14.

Next, a main process executed by the CPU 11 of the PC 1 will be described with reference to FIG. 4.

FIG. 4 is a flowchart illustrating steps in the main process. The main process functions to toggle the present operation screen to one suited operation screen to the user based on various user settings for the PC 1 and characteristics of the user's input operations. The CPU 11 executes the main process once when the application program X is first executed. The CPU 11 executes the main process at prescribed intervals (every 30 minutes, for example) while the application program X is running.

In S11 of the main process, the CPU 11 initializes each of the memory areas 13a-13h provided in the RAM 13. In S12 the CPU 11 determines whether the toggle flag stored in the toggle flag memory area 14c3 is set to "on." If the toggle flag is set to "on" (S12: YES), then the CPU 11 executes a user type determination process in S13. The user type determination process of S13 determines whether the user is a visually impaired user or a sighted user. However, if the toggle flag is "off" (S12: NO), then the CPU 11 ends the main process without performing S13-S20.
The user type determination process will be described later in detail.

In S14 the CPU 11 acquires and determines the user type determined in the user type determination process of S13. If the user type is determined to be a visually impaired user (S14: VISUALLY IMPAIRED USER), i.e., if the user type memory area 13h stores a user type indicating a visually impaired user, then in S15 the CPU 11 reads the UI type stored in the UI type memory area 14c5.

In S16 the CPU 11 determines whether the UI type read in S15 indicates a sighted user. If the user type indicates a sighted user (S16: YES), then in S17 the CPU 11 executes a screen toggling process A and subsequently ends the main process. The screen toggling process A functions to toggle the UI for the sighted user displayed on the LCD 17 to the UI for the visually impaired user. However, if the user type indicates a visually impaired user (S16: NO), then the CPU 11 ends the main process without executing the process of S17. The screen toggling process A will be described in detail later.

Alternatively, if the CPU 11 determines that the user type determined in S13 is a sighted user (S14: SIGTHED USER), i.e., that the user type memory area 13h stores a user type indicating a sighted user, in S18 the CPU 11 reads the UI type stored in the UI type memory area 14c5.

In S19 the CPU 11 determines whether the UI type read in S18 indicates a visually impaired user. If the user type indicates a visually impaired user (S19: YES), then in S20 the CPU 11 executes a screen toggling process B and subsequently ends the main process. The screen toggling process B functions to toggle the UI for the visually impaired user displayed on the LCD 17 to the UI for the sighted user. The screen toggling process B will be described in detail later. However, if the user type indicates a sighted user (S19: NO), then the CPU 11 ends the main process without performing the process in S20.

Through the main process described in FIG. 4, the CPU 11 can toggle the operation screen to one suited to the user based on various user settings for the PC 1 and characteristics of the user's input operations. Hence, even if the UI for the sighted user is displayed on the LCD 17, the operation screen is switched to the UI for the visually impaired user when a visually impaired user performs input operations, making the process more user-friendly for visually impaired users for which each operation is time-consuming. The process is also user-friendly for a sighted user since the UI for the visually impaired user displayed on the LCD 17 is switched to the UI for the sighted user when a sighted user performs input operations.

Next, the user type determination process of S13 will be described with reference to FIG. 5.

FIG. 5 is a flowchart illustrating steps in the user type determination process. This process is performed to determine whether the user of the PC 1 is visually impaired user or sighted, based on various user settings for the PC 1 and characteristics of the user's input operations.

In S31 of the user type determination process, the CPU 11 initializes the key input count memory area 13e and mouse input count memory area 13f. In S32 the CPU 11 executes a usage status acquisition process. Here, the usage status acquisition process executed by the CPU 11 will be described with reference to FIG. 6A.

FIG. 6A is a flowchart illustrating steps in the usage status acquisition process. This process is performed to acquire user settings for the PC 1 and to determine whether the settings have been made to facilitate use by a visually impaired person.

In S51 of the usage status acquisition process, the CPU 11 determines whether a screen reader has been installed on (stored in) the screen reader memory area 14b. If a screen reader is installed on the screen reader memory area 14b (S51: YES), in S52 the CPU 11 sets the condition conformity flag stored in the condition conformity flag memory area 13a of the RAM 13 to "on." However, if the screen reader is not installed (S51: NO), in S53 the CPU 11 sets the condition conformity flag to "off." Subsequently, the CPU 11 ends the usage status acquisition process.

Through the usage status acquisition process, the CPU 11 can set the condition conformity flag to "on," indicating that the PC 1 was configured for the visually impaired users, when a screen reader was installed on the hard disk 14. Since screen readers are used primarily by visually impaired people, it may be considered highly likely that the PC 1 is operated by a visually impaired user when a screen reader has been installed on the PC 1.

Returning to the flowchart in FIG. 5, in S33 the CPU 11 determines whether the condition conformity flag stored in the condition conformity flag memory area 13a has been set to "on." If the condition conformity flag is set to "on" (S33: YES), in S34 the CPU 11 executes an operation acquisition process. If the condition conformity flag is set to "off" (S33: NO), then the CPU 11 skips the process in S34-S41 and advances to S42.

Here, the operation acquisition process of S34 executed by the CPU 11 will be described with reference to FIG. 6B.

FIG. 6B is a flowchart illustrating steps in the operation acquisition process of S34. This operation acquisition process is performed to acquire input operations performed using the keyboard 15 and input operations performed using the mouse 16.

In S61 at the beginning of the operation acquisition process, the CPU 11 acquires a key operation performed with the keyboard 15 or a mouse operation performed with the mouse 16 and in S62 determines whether the acquired input operation is performed in the application program X. If the acquired input operation is performed in the application program X (S62: YES), the CPU 11 ends the operation acquisition process. However, if the acquired input operation is not performed in the application program X (S62: NO), the CPU 11 returns to S61 and repeats the process in S61-S62.

Through the operation acquisition process shown in FIG. 6B, the CPU 11 can acquire an input operation performed in the application program X from among various input operations using the keyboard 15 and the mouse 16.

Returning to FIG. 5, in S35 the CPU 11 determines whether the input operation acquired in S34 is an input operation to press one of a Tab key, Control key and Tab key, Space key, Alt key, and Arrow keys. If the acquired input operation is one of the above keys (S35: YES), in S36 the CPU 11 increments the value stored in the key input count memory area 13e by "1".

In S37 the CPU 11 determines whether the count stored in the key input count memory area 13e has exceeded "10". If the count has exceeded "10" (S37: YES), in S38 the CPU 11 stores the user type indicating a visually impaired user ("1" in the first embodiment) in the user type memory area 13h and subsequently ends the user type determination process.

However, if the count is no greater than "10" (S37: NO), then the CPU 11 returns to S34 and repeats the process in S34-S37 described above.

Further, if the CPU 11 determines in S35 that the acquired input operation is not one of the above listed operations (S35: NO), in S39 the CPU 11 determines whether the acquired input operation is a mouse click. If the acquired input operation is a mouse click (S39: YES), in S40 the CPU 11 increments the count in the mouse input count memory area 13f by "1". In S41 the CPU 11 determines whether the count stored in the mouse input count memory area 13f has exceeded "5". If the count has exceeded "5" (S41: YES), then in S42 the CPU 11 stores the user type indicating a sighted user ("2" in the first embodiment) in the user type memory area 13h and subsequently ends the user type determination process.

However, if the CPU 11 determines in S39 that the acquired input operation is not a mouse click (S39: NO), the CPU 11 returns to S34 and repeats the process in S34-S39 described above. Further, if the CPU 11 determines in S41 that the count is no greater than "5" (S41: NO), then the CPU 11 returns to S34 and repeats the process in S34-S41 described above.

Since a visually impaired user has difficulty performing input operations while viewing the operation screen, it can be considered less likely that a visually impaired user would perform input operations with the mouse 16 in comparison to a sighted user. Further, since the sighted user can perform input operations while viewing the operation screen, the sighted user is probably more likely to perform input operations with the mouse 16 than a visually impaired user since tasks can be completed in fewer operations on the mouse 16 than on the keyboard 15.

Therefore, it can be thought that a visually impaired user is operating the PC 1 when more input operations are performed with the keyboard 15 as determined in S37, and that a sighted user is operating the PC 1 when more input operations are performed with the mouse 16 as determined in S41.

The PC 1 is configured to allow input operations with both the keyboard 15 and the mouse 16. However, characteristics in these input operations can easily be detected since the difference in characteristics is conspicuous between input operations performed by a visually impaired user and a sighted user.

Through the user type determination process shown in FIG. 5, the CPU 11 can determine whether the user is visually impaired or sighted based on user settings for the PC 1 and the number of input operations performed with the keyboard 15 or the number of input operations performed with the mouse 16. Further, the CPU 11 can store in the user type memory area 13h the user type indicating a visually impaired user upon determining that the user is visually impaired and the user type indicating a sighted user upon determining that the user is sighted.

Next, the screen toggling process A of S17 executed by the CPU 11 of the PC 1 will be described with reference to FIG. 7.

FIG. 7 is a flowchart illustrating steps in the screen toggling process A. This process is performed for switching the UI for the sighted user displayed on the LCD 17 to the UI for the visually impaired user.

The process functions to display the Screen Toggling button BT7 in the display region of the UI for the visually impaired user when the operation screen has been switched to the UI for the visually impaired user.

In S71 at the beginning of the screen toggling process A, the CPU 11 determines whether the confirmation display flag stored in the confirmation display flag memory area 14c4 is set to "on." If the confirmation display flag is set to "on" (S71: YES), in S72 the CPU 11 displays the dialog box B on the LCD 17 prompting the user to confirm whether to switch the operation screen to the UI for the visually impaired user. However, if the confirmation display flag is set to "off" (S71: NO), the CPU 11 skips the process in S72-S75 and advances to S76.

Here, the dialog box B will be described with reference to FIG. 9A.

FIG. 9A is a screenshot showing an example of the dialog box B. The dialog box B is a window for displaying a message prompting the user to confirm whether to switch the operation screen to the UI for the visually impaired user by inputting an instruction.

The dialog box B is provided with a text box TB41 displaying a message prompting the user to confirm whether to switch the operation screen to the UI for the visually impaired user, a checkbox CB41 allowing the user to input an instruction for not displaying the dialog box B on the LCD 17 in the future, a YES button BT41 allowing the user to input an instruction to switch the operation screen to the UI for the visually impaired user, and a NO button BT42 allowing the user to input an instruction not to switch the operation screen to the UI for the visually impaired user.

The text box TB41 displays the text data "You can switch the screen to a window suitable for keyboard operations corresponding to voicing software," for example. Further, the text data "Don't show this message in the future" is displayed to the right of the checkbox CB41. In addition, the button names "Yes" and "No" are assigned to the YES button BT41 and the NO button BT42, respectively.

This configuration facilitates a visually impaired user in performing input operations since the screen reader can convert text data displayed in the text box TB41, text data displayed to the right of the checkbox CB41, and the button names for the buttons BT41 and BT42 provided in the dialog box B to voice signals.

If the user performs an input operation to press the YES button BT41, the operation screen on the LCD 17 is switched to the UI for the visually impaired user. If the NO button BT42 is pressed, the operation screen is left unchanged. When one of the buttons BT41 and BT42 is pressed, the window in which the dialog box B is displayed is closed.

If the user has inputted a checkmark in the checkbox CB41 when the button BT41 or BT42 is pressed, the CPU 11 sets the confirmation display flag stored in the confirmation display flag memory area 14c4 to "off."

Returning to FIG. 7, in S73 the CPU 11 determines whether the Yes button BT41 has been pressed in the dialog box B. If the Yes button BT41 has been pressed (S73: YES), in S74 the CPU 11 determines whether a checkmark has been inserted into the checkbox CB41.

When a checkmark has been inserted into the checkbox CB41 of dialog box B (S74: YES), in S75 the CPU 11 sets the confirmation display flag stored in the confirmation display flag memory area 14c4 to "off."

However, if a checkmark has not been inputted into the checkbox CB41 (S74 : NO), the CPU 11 skips S75 and advances to S76.

In S76 the CPU 11 stores the UI type indicating a visually impaired user ("1" in the first embodiment) in the UI type memory area 14c5. In S77 the CPU 11 switches the operation screen displayed on the LCD 17 to the operation screen corresponding to the UI type stored in the UI type memory area 14c5, i.e., the UI for the visually impaired user. Specifically, the CPU 11 closes the window in which the UI for the sighted user is displayed, acquires a new window from the OS, and displays the UI for the visually impaired user in the newly acquired window. In S80 the CPU 11 displays the Screen Toggling button BT7 (see FIG. 2A) in the display region of the UI for the visually impaired user on the LCD 17, and subsequently ends the screen toggling process A.

However, if the No button BT42 is pressed in the dialog box B (S73: NO), in S78 the CPU 11 determines whether a checkmark has been inputted into the checkbox CB41.

If a checkmark is inserted into the checkbox CB41 (S78: YES), in S79 the CPU 11 sets the confirmation display flag stored in the confirmation display flag memory area 14c4 to "off." However, if a checkmark has not been inserted into the checkbox CB41 (S78: NO), the CPU 11 ends the screen toggling process A without performing the process in S79.

Through the screen toggling process A shown in FIG. 7, the CPU 11 can display the dialog box B on the LCD 17 prompting the user to confirm whether to switch the operation screen to the UI for the visually impaired user, provided that the confirmation display flag is set to "on" when switching the UI for the sighted user displayed on the LCD 17 to the UI for the visually impaired user. Further, when the dialog box B is displayed, the CPU 11 can switch the operation screen displayed on the LCD 17 to the UI for the visually impaired user under the condition that the user inputs an instruction to switch the operation screen to the UI for the visually impaired user. Accordingly, this configuration can prevent the UI for the visually impaired user from being displayed on the LCD 17 when the user is sighted user.

In other words, by providing the Screen Toggling button BT7 in the display region of the UI for the visually impaired user when the UI is displayed on the LCD 17, a sighted user can switch the UI for the visually impaired user to the UI for the sighted user by operating this Screen Toggling button BT7, without having to wait for the CPU 11 to determine the type of user in the main process of FIG. 4.

Next, the screen toggling process B of S20 executed by the CPU 11 will be described with reference to FIG. 8.

FIG. 8 is a flowchart illustrating steps in the screen toggling process B. This process is performed for toggling the UI for the visually impaired user displayed on the LCD 17 to the UI for the sighted user. In S81 at the beginning of the screen toggling process B, the CPU 11 determines whether the confirmation display flag stored in the confirmation display flag memory area 14c4 is set to "on." If the confirmation display flag is set to "on" (S81: YES), in S82 the CPU 11 displays a dialog box C on the LCD 17 prompting the user to confirm whether to switch the operation screen to the UI for the sighted user. However, if the confirmation display flag is set to "off" (S81: NO), the CPU 11 skips the process in S82-S85 and advances to S86.

Here, the dialog box C will be described with reference to FIG. 9B. FIG. 9B is a screenshot showing an example of the dialog box C. The dialog box C is a window for displaying a message prompting the user to confirm whether to switch the operation screen to the UI for the sighted user by inputting an instruction.

The dialog box C is provided with a text box TB51 displaying a message prompting the user to confirm whether to switch the operation screen to the UI for the sighted user, a checkbox CB51 allowing the user to insert an instruction for not displaying the dialog box C on the LCD 17 in the future, a YES button BT51 allowing the user to input an instruction to switch the operation screen to the UI for the sighted user, and a NO button BT52 allowing the user to input an instruction not to switch the operation screen to the UI for the sighted user.

The text box TB51 displays the text data "You can switch the screen to a visual window suitable for mouse operations (note: information in the screen cannot be read by a screen reader and input operations cannot be performed with the keyboard)," for example. Further, the text data "Don't show this message in the future" is displayed to the right of a checkbox CB51. In addition, the button names "Yes" and "No" are assigned to the YES button BT51 and NO button BT52, respectively.

Since the text data and other content displayed in the dialog box C is not announced to a visually impaired user, it would be difficult for a visually impaired user to recognize content in the dialog box C. Therefore, it is unlikely that a visually impaired user would perform an input operation on the button BT51 in the dialog box C to switch the UI for the visually impaired user to the UI for the sighted user. Accordingly, this configuration reduces the chance that a visually impaired user operating the PC 1 will mistakenly switch the UI for the visually impaired user displayed on the LCD 17 to the UI for the sighted user.

The screen reader cannot convert the text data displayed in the text box TB51 and to the right of the checkbox CB51 and button names for the buttons BT51 and BT52 provided in the dialog box C to voice signals.

Further, the dialog box C is configured to accept only input operations with the mouse 16. Hence, the operation screen on the LCD 17 is switched to the UI for the sighted user only when the YES button BT51 is clicked with the mouse 16. In other words, since such input operations are difficult to perform by a visually impaired user, it can be assumed that a user performing input operations in the dialog box C is sighted user. Since it is difficult for a visually impaired user to perform input operations using the mouse 16, it is unlikely that a visually impaired user will click on the YES button BT51 to switch the UI for the visually impaired user to the UI for the sighted user. Accordingly, this configuration reduces the chance that a visually impaired user operating the PC 1 will mistakenly switch the UI for the visually impaired user displayed on the LCD 17 to the UI for the sighted user. The operation screen is not switched when the NO button BT52 is pressed. Further, when either of the YES button BT51 or the NO button BT52 is pressed, the window in which the dialog box C is displayed is closed.

Further, since messages for switching to a UI for the sighted user are suppressed for visually impaired users, the visually impaired user can avoid such unnecessary input operations, making the system more user-friendly.

When the user performs an input operation on the mouse 16 to press the YES button BT51, the operation screen on the LCD 17 is switched to the UI for the sighted user. If the NO button BT52 is pressed, the operation screen is left unchanged.

Further, if the user has inserted a checkmark in the checkbox CB41 when the YES button BT51 or NO button BT52 is pressed, the CPU 11 sets the confirmation display flag stored in the confirmation display flag memory area 14c4 to "off."

Returning to FIG. 8, in S83 the CPU 11 determines whether the Yes button BT51 in the dialog box C displayed on the LCD 17 has been pressed with a mouse click operation. If the Yes button BT51 has been clicked (S83: YES), in S84 the CPU 11 determines whether a checkmark has been inserted in the checkbox CB51.

If a checkmark has been inserted into the checkbox CB51 (S84: YES), in S85 the CPU 11 sets the confirmation display flag stored in the confirmation display flag memory area 14c4 to "off."

However, if a checkmark has not been inserted into the checkbox CB51 (S84 : NO), the CPU 11 skips S85 and advances to S86.

In S86 the CPU 11 stores the UI type indicating a sighted user ("2" in the first embodiment) in the UI type memory area 14c5. In S87 the CPU 11 switches the operation screen displayed on the LCD 17 to the operation screen corresponding to the UI type stored in the UI type memory area 14c5, i.e., the UI for the sighted user, and subsequently ends the screen toggling process B. In other words, the CPU 11 closes the window in which the UI for the visually impaired user is displayed, acquires a new window from the OS, displays the UI for the sighted user in the newly acquired window, and ends the process.

However, if the CPU 11 determines in S83 that the No button BT52 is pressed in the dialog box C (S83: NO), in S88 the CPU 11 determines whether a checkmark is inserted into the checkbox CB51.

If a checkmark is inserted into the checkbox CB51 (S88: YES), in S89 the CPU 11 sets the confirmation display flag stored in the confirmation display flag memory area 14c4 to "off."

However, if a checkmark is not inserted into the checkbox CB51 (S88: NO), the CPU 11 ends the screen toggling process B without performing the process in S89.

Through the screen toggling process B shown in FIG. 8, the CPU 11 can display the dialog box C on the LCD 17 prompting the user to confirm whether to switch the operation screen to the UI for the sighted user, provided that the confirmation display flag is set to "on" when switching the UI for the visually impaired user displayed on the LCD 17 to the UI for the sighted user. Further, when the dialog box C is displayed, the CPU 11 can switch the operation screen displayed on the LCD 17 to the UI for the sighted user under the condition that the user inputs an instruction to switch to the UI for the sighted user. Hence, since the user must perform an input operation using the mouse 16 in order to switch the operation screen to the UI for the sighted user, it is unlikely that a visually impaired user will mistakenly switch the operation screen to the UI for the sighted user.

In the first embodiment, the CPU 11 can determine whether the a user is visually impaired or sighted based on user settings for the PC 1 and characteristics of the user's input operations and switches the operation screen to a screen best suited to the user. Accordingly, the operation screen is switched to the UI for the visually impaired user when a visually impaired user is performing input operations, even when the UI for the sighted user is displayed on the LCD 17, thereby making the system more user-friendly to a visually impaired user for which each operation is time-consuming. Further, the operation screen is switched to the UI for the sighted user when a sighted user is performing input operations, even when the UI for the visually impaired user is displayed on the LCD 17, making the system more user-friendly to a sighted user.

Further, by providing the Screen Toggling button BT7 in the UI for the visually impaired user, a sighted user can toggle the UI for the visually impaired user displayed on the LCD 17 to the UI for the sighted user by operating the Screen Toggling button BT7, before the CPU 11 determines the type of user in the user type determining process of FIG. 5. Hence, the addition of this button is convenient for a sighted user.

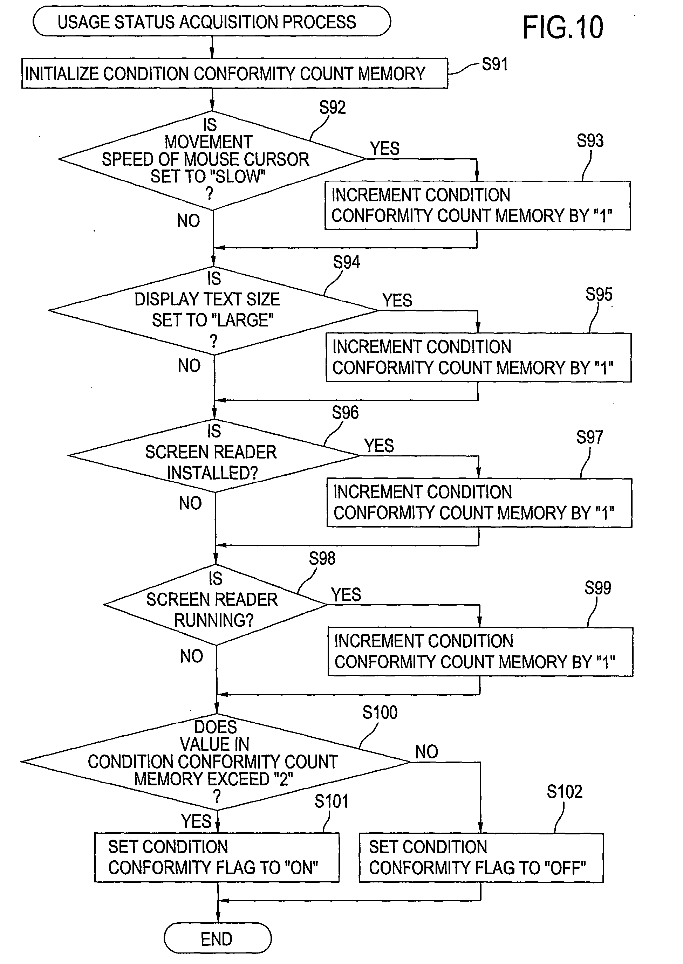

Next, a usage status acquisition process executed by the CPU 11 of the PC 1 as a first variation of the usage status acquisition process in S32 (see FIG. 5) will be described with reference to FIG. 10. While the CPU 11 acquires a single user setting for the PC 1 in the usage status acquisition process of the first embodiment, but the CPU 11 acquires a plurality of user settings for the PC 1 and determines whether each of these settings has been performed to facilitate use by a visually impaired user, in the usage status acquisition process according to the first variation.

FIG. 10 is a flowchart illustrating steps in the usage status acquisition process according to a first variation of the first embodiment.

In S91 of the usage status acquisition process, the CPU 11 initializes the condition conformity count memory area 13d. In S92 the CPU 11 determines whether the speed of mouse cursor movement in the OS settings is slower than the default setting established when the OS was installed. Specifically, the CPU 11 determines the speed of mouse cursor is set to "SLOW". If the mouse cursor speed is set slower than the default setting (S92: YES), in S93 the CPU 11 increments the count value stored in the condition conformity count memory area 13d by "1". However, if the mouse cursor is not set slower than the default setting (S92: NO), the CPU 11 skips S93 and advances to S94.

In S94 the CPU 11 determines whether the text size set in the OS settings for the size of text displayed on the screen is larger than the default setting established when the OS was installed. Specifically, the CPU 11 determines whether text size is set to "LARGE". If the text size is set larger than the default setting (S94: YES), in S95 the CPU 11 increments the count value in the condition conformity count memory area 13d by "1". However, if the text size is not set larger than the default setting (S94: NO), the CPU 11 skips S95 and advances to S96.

In S96 the CPU 11 determines whether a screen reader is installed on (stored in) the screen reader memory area 14b. If a screen reader is installed on the screen reader memory area 14b (S96: YES), in S97 the CPU 11 increments the count value stored in the condition conformity count memory area 13d by "1". However, if a screen reader is not installed (S96: NO), the CPU 11 skips S97 and advances to S98.

In S98 the CPU 11 determines whether the screen reader is running. If the screen reader is running (S98: YES), in S99 the CPU 11 increments the count value
stored in the condition conformity count memory area 13d by "1". However, if the screen reader is not running (S98: NO), the CPU 11 skips S99 and advances to S100.

In S100 the CPU 11 determines whether the count stored in the condition conformity count memory area 13d exceeds "2". If the count exceeds "2" (S100: YES), in S101 the CPU 11 sets the condition conformity flag stored in the condition conformity flag memory area 13a to "on" and subsequently ends the usage status acquisition process. However, if the count is no greater than "2" (S100: NO), in S102 the CPU 11 sets the condition conformity flag to "off" and subsequently ends the usage status acquisition process.

Through the usage status acquisition process shown in FIG. 10, the CPU 11 acquires a plurality of user settings for the PC 1 and can set the condition conformity flag to "on" by assuming that the PC 1 is set to facilitate use by a visually impaired user when the number of settings for facilitating use by a visually impaired user exceeds "2". In other words, if the number of settings performed to facilitate of the PC 1 by a visually impaired user exceeds "2", it is highly probable that the user is visually impaired.

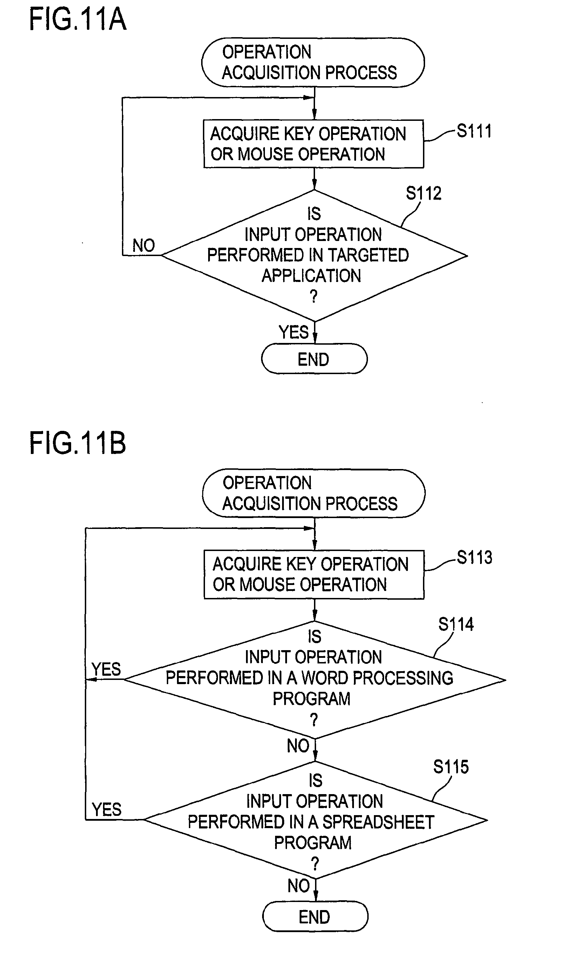

Next, operation acquisition processes according to second, third and fourth variations, which are variations of the operation acquisition process of the first embodiment, will be described with reference to Figs. 11A-11C.

First, the operation acquisition process in the second variation will be described. FIG. 11A is a flowchart illustrating steps in the operation acquisition process according to the second variation of the first embodiment. While the operation acquisition process of S34 in the first embodiment functions to acquire input operations in its own program, this process is performed to acquire input operations that the user performs in a plurality of application programs preset as targets for operation acquisition.

In S111 of the operation acquisition process, the CPU 11 acquires a key operation performed on the keyboard 15 or a mouse operation performed on the mouse 16. In S112 the CPU 11 determines whether the input operation acquired in S111 is performed in one of the target application programs. If the acquired input operation is performed in one of the target application programs (S112: YES), the CPU 11 ends the operation acquisition process. However, if the acquired input operation is not performed in one of the target application programs (S112: NO), the CPU 11 returns to S111 and repeats the process in S111-S112.

Through the operation acquisition process shown in FIG. 11A, the CPU 11 can acquire an input operation performed in one of a plurality of application programs preset as targets for operation acquisition from among input operations performed using the keyboard 15 and the mouse 16.

For example, if application programs targeted for operation acquisition, capable of being input operations with both the keyboard 15 and the mouse 16, is primarily input the operations with the mouse 16 when the user is sighted, then it is highly probable that the user is visually impaired when input operations are performed using the keyboard 15. In other words, since the difference between characteristics of input operations performed by a visually impaired user and a sighted user is considerable, it is possible to determine whether the user is visually impaired or sighted with greater accuracy. Examples of application programs in which input is primarily performed using a pointing device are image processing programs and the application program X.

Next, the operation acquisition process in the third embodiment will be described. FIG. 11B is a flowchart illustrating steps in the operation acquisition process according to the third embodiment. This process serves to acquire input operations performed in applications other than word processing software such as MS Word (registered trademark) and spreadsheet software such as MS Excel (registered trademark).

In S113 of the operation acquisition process, the CPU 11 acquires a key operation performed on the keyboard 15 or a mouse operation performed on the mouse 16. In S114 the CPU 11 determines whether the input operation acquired in S113 is performed in a word processing program. If the acquired input operation is performed in an application program other than a word processing program (S114: NO), in S115 the CPU 11 determines whether the acquired input operation is performed in a spreadsheet program.

If the acquired input operation is performed in an application other than a spreadsheet program (S115: NO), the CPU 11 ends the operation acquisition process.

However, if the CPU 11 determines in S114 that the acquired input operation is performed in a word processing program (S114: YES) or determines in S115 that the acquired input operation is performed in a spreadsheet program (S115: YES), then the CPU 11 returns to S113 and repeats the process in S113-S115.

Through the operation acquisition process shown in FIG. 11B, the CPU 11 can acquire an input operation performed in an application program other than word processing or spreadsheet programs from among input operations performed using the keyboard 15 and the mouse 16.

Here, input operations in word processing and spreadsheet programs are typically performed using the keyboard 15, regardless of whether the user is visually impaired or sighted, revealing little difference in the characteristics of input operations. Hence, by not acquiring input operations performed in word processing and spreadsheet programs, it is possible to determine whether the user is visually impaired or sighted with greater accuracy.

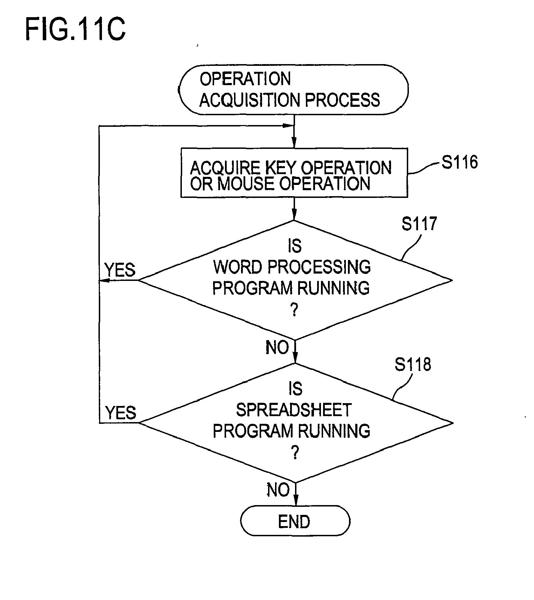

Next, the operation acquisition process according to the fourth variation will be described. FIG. 11C is a flowchart illustrating steps in the operation acquisition process in the fourth variation. In this process, input operations are not acquired when word processing software such as MS Word (registered trademark) or spreadsheet software such as MS Excel (registered trademark) is running on the PC 1.

In S116 of the operation acquisition process, the CPU 11 acquires a key operation performed on the keyboard 15 or a mouse operation performed on the mouse 16. In S117 the CPU 11 determines whether a word processing program is running. If a word processing program is not running (S117: NO), in S118 the CPU 11 determines whether a spreadsheet program is running. If a spreadsheet program is not running (S118: NO), the CPU 11 ends the operation acquisition process.

If the CPU 11 determines in S117 that a word processing program is running (S117: YES) or determines in S118 that a spreadsheet program is running (S118: YES), then the CPU 11 returns to S116 and repeats the process in S116-S118.

Through the operation acquisition process shown in FIG. 11C, the CPU 11 can acquire an input operation from among input operations performed using the keyboard 15 and the mouse 16 when neither a word processing program nor a spreadsheet program is running.

Further, the method of determining whether a word processing program or spreadsheet program is running and determining not to acquire an input operation when such a program is running is a simpler operation than determining whether each input operation has been performed in a word processing program or spreadsheet program.

Next, a user type determination process in a fifth variation of the first embodiment will be described. This process is a variation of the user type determination process in the first embodiment (FIG. 5).

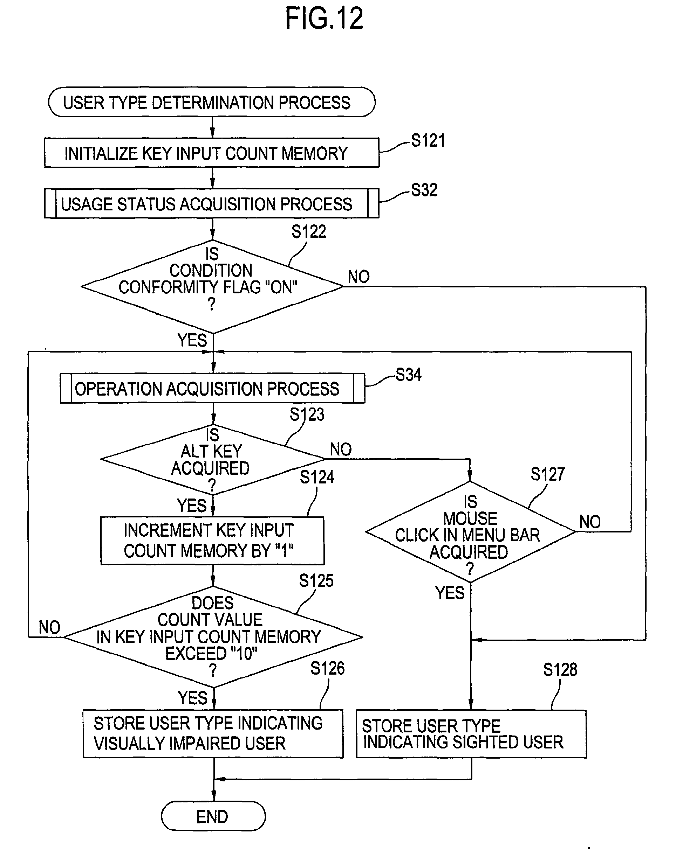

FIG. 12 is a flowchart illustrating steps in the user type determination process according to the fifth variation of the first embodiment. This process is performed to determine whether the operator of the PC 1 is visually impaired or sighted based on characteristics of input operations performed to display a menu bar on the LCD 17.

In S121 of the user type determination process, the CPU 11 initializes the key input count memory area 13e. In S32 the CPU 11 executes the usage status acquisition process shown in FIG. 6A. In S122 the CPU 11 determines whether the condition conformity flag stored in the condition conformity flag memory area 13a is set to "on." If the condition conformity flag is set to "on" (S122: YES), in S34 the CPU 11 executes the operation acquisition process shown in FIG. 6B. However, if the condition conformity flag is set to "off" (S122: NO), then the CPU 11 skips the process in S34-S127 and advances to S128.

In S123 the CPU 11 determines whether the input operation acquired in S34 is the Alt key. If the acquired input operation is the Alt key (S123: YES), in S124 the CPU 11 increments the count value stored in the key input count memory area 13e by "1".

In S125 the CPU 11 determines whether the count value stored in the key input count memory area 13e exceeds "10". If the count exceeds "10" (S125: YES), in S126 the CPU 11 stores the user type indicating a visually impaired user ("1" in the fifth variation) in the user type memory area 13h of the RAM 13 and subsequently ends the user type determination process.

However, if the count value is no greater than "10" (S125: NO), then the CPU 11 returns to S34 and repeats the process in S34-S125 described above.

Further, if the CPU 11 determines in S123 that an Alt key operation is not acquired (S123: NO), in S127 the CPU 11 determines whether the acquired input operation is a mouse click for displaying a menu bar. If the acquired input operation is a mouse click (S127: YES), in S128 the CPU 11 stores the user type indicating a sighted user ("2" in the fifth variation) in the user type memory area 13h and subsequently ends the user type determination process.

However, if the CPU 11 determines in S127 that the acquired input operation is not a mouse click for displaying a menu bar (S127: NO), the CPU 11 returns to S34 and repeats the process in S34-S127 described above.

In most application programs, the user commonly displays a menu bar on the LCD 17 and selects a desired process in the menu bar to execute this process. Accordingly, operations to display a menu bar on the LCD 17 are frequently performed among input operations.

When the menu bar is displayed on the LCD 17 using the keyboard 15, it is likely that a visually impaired user is using the application. If the menu bar is displayed on the LCD 17 using the mouse 16, it is likely that the user is sighted.

Through the user type determination process described in FIG. 12, the CPU 11 can determine whether the operator of the PC 1 is visually impaired or sighted based on user settings for the PC 1, and whether operations performed to display a menu bar on the LCD 17 are input with the keyboard 15 or the mouse 16.

While the invention has been described in detail with reference to the first embodiment and variations thereof, it would be apparent to those skilled in the art that various changes and modifications may be made therein without departing from the spirit of the invention.

For example, in S80 of the screen toggling process A (see FIG. 7) according to the first embodiment, the PC 1 displays the Screen Toggling button BT7 in the display region of the UI for the visually impaired user. However, the PC 1 may be configured to display this Screen Toggling button BT7 outside of the display region for the UI for the visually impaired user.

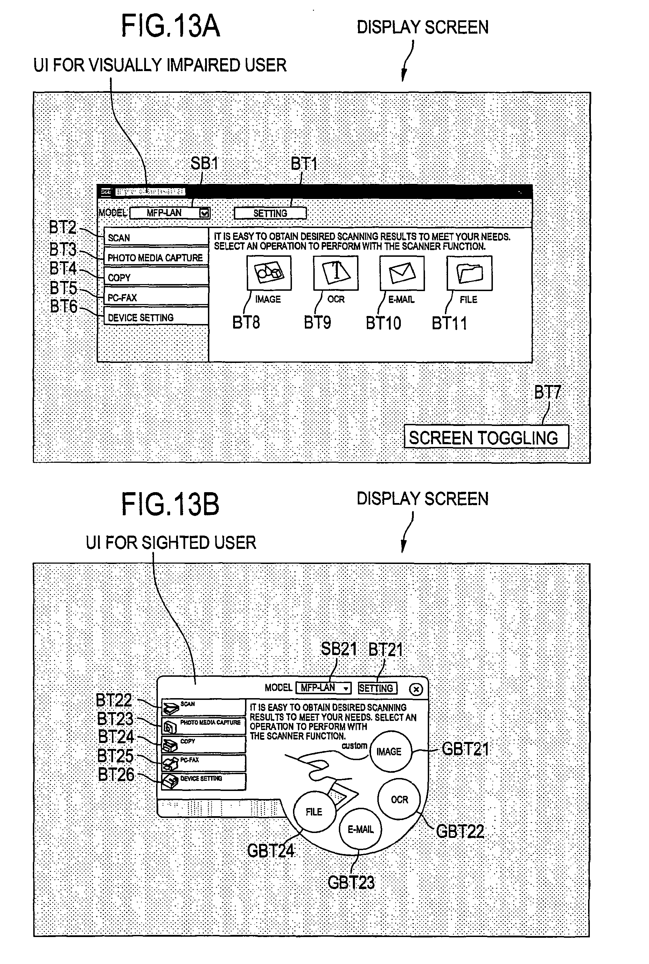

Specifically, the Screen Toggling button BT7 may be displayed at a predetermined position within the display area of the LCD 17 (for example, in the bottom right corner of the display region), as shown in FIG. 13A. In this case, a sighted user can easily find the Screen Toggling button BT7, even when the display on the LCD 17 is cluttered with a plurality of operation screens, by looking in the predetermined position. Accordingly, the sighted user can easily switch the UI for the visually impaired user to the UI for the sighted user, even when the display on the LCD 17 is cluttered, making the configuration user-friendly to a sighted user. When the UI for the sighted user is displayed on the LCD 17, the Screen Toggling button BT7 is not displayed on the LCD 17, as shown in FIG. 13B.

In the first embodiment described above, the UI for the visually impaired user displayed on the LCD 17 is switched to the UI for the sighted user when the Screen Toggling button BT7 is pressed. However, a checkbox CB may be provided in the display region of the UI for the visually impaired user to specify whether to switch the UI for the visually impaired user to the UI for the sighted user. By pressing the Settings button BT1 when the checkbox CB is checked, the PC 1 may be configured to change operation screen to the UI for the sighted user.

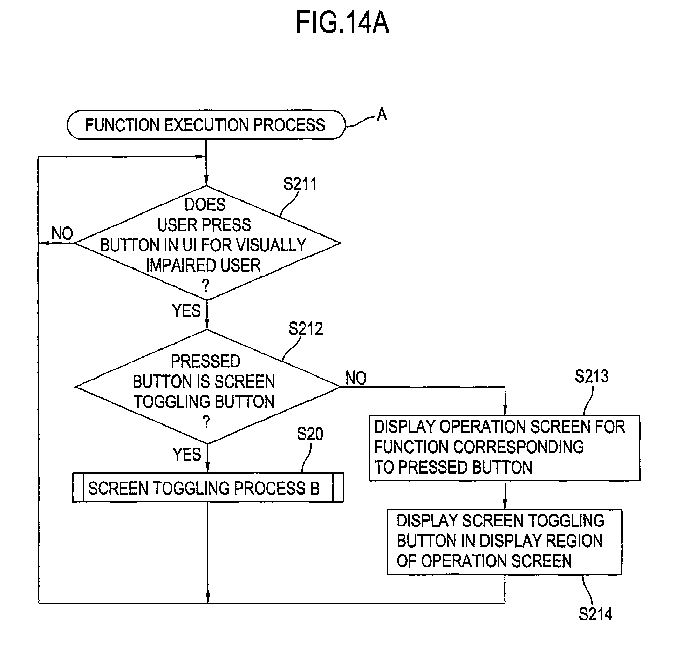

Next, a PC 101 according to a second embodiment will be described with reference to FIGs. 14A through 15B. The PC 101 has the same configuration as the PC 1 according to the first embodiment, except that PC 101 further executes function execution processes A and B.

Therefore, while the PC 1 according to the first embodiment displays the Screen Toggling button BT7 in the display region of the UI for the visually impaired user when the UI is displayed on the LCD 17, the PC 101 according to the second embodiment also displays the Screen Toggling button BT7 in a display region of each function's operation screen on the LCD 17 when one of the buttons BT1-BT11 (excluding the Screen Toggling button BT7) is pressed in the UI for the visually impaired user.

As described in FIG. 2A, the UI for the visually impaired user and the UI for the sighted user are provided with the buttons BT1-BT11 (excluding the Screen Toggling button BT7) and the buttons BT21-BT26 and graphical buttons GBT21-GBT24, respectively, for using various functions of the MFP 100. When the user presses one of these buttons, the operation screen for the function corresponding to the pressed button is displayed on the LCD 17.

A function's operation screen enables the user to perform settings for the application program X or to use functions of the MFP 100 and to input instructions for setting options.

Next, a function execution process A performed by the CPU 11 of the PC 10 will be described with reference to FIG. 14A. FIG. 14A is a flowchart illustrating steps in the function execution process.

The function execution process is performed to display the operation screen of a function corresponding to the buttons BT1-BT11 (excluding the Screen Toggling button BT7) pressed by the user when the UI for the visually impaired user is displayed on the LCD 17 and to display the Screen Toggling button BT7 in a display region of the function's operation screen. This process is repeatedly executed while the application program X is running. The function execution process is stored in the application program X memory area 14c, for example.

In S211 of the function execution process, the CPU 11 determines whether the user presses one of the buttons BT1-BT11 in the UI for the visually impaired user. The CPU 11 waits while one of the buttons BT1-BT11 is not pressed (S211: NO). When one of the buttons BT1-BT11 is pressed (S211: YES), in S212 the CPU 11 determines whether the pressed button is the Screen Toggling button BT7.

If the pressed button is the Screen Toggling button BT7 (S212: YES), in S20 the CPU 11 executes the screen toggling process B in FIG. 8 described above, and returns to S211.

However, when the pressed button is not the Screen Toggling button BT7 (S212: NO), in S213 the CPU 11 displays the operation screen for the function corresponding to the pressed button BT1-BT11 (excluding the Screen Toggling button BT7) on the LCD 17. Specifically, the CPU 11 acquires a window from the OS and displays the operation screen for the function corresponding to the pressed button in the acquired window.

In S214 the CPU 11 displays the Screen Toggling button BT7 in a display region of the function's operation screen, and returns to S211.

For example, when the user presses the Scan button BT2 using the keyboard 15 or the mouse 16 while the UI for the visually impaired user is displayed on the LCD 17, the CPU 11 displays the scanner function operation screen on the LCD 17 for using the scanner function of the MFP 100, and subsequently displays the Screen Toggling button BT7 in a display region of this scanner function operation screen.

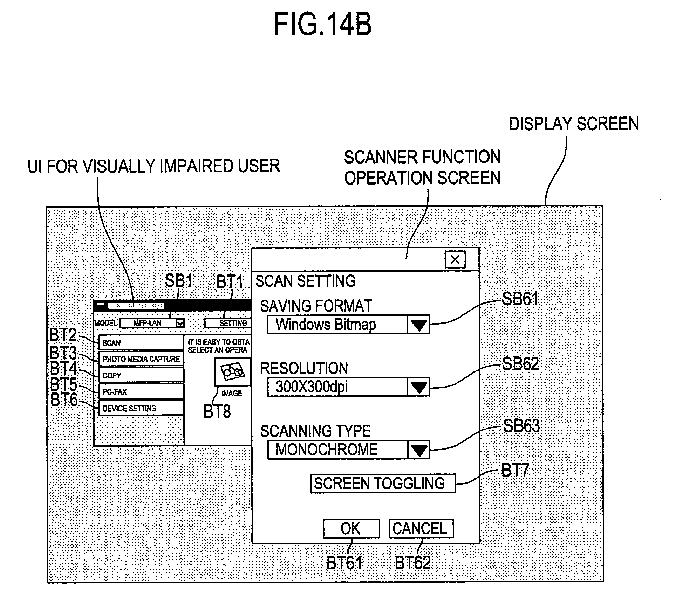

FIG. 14B is a screenshot showing an example of
the scanner function operation screen displayed on the LCD 17 when the user presses the Scan button BT2 in the UI for the visually impaired user.

The scanner function operation screen shown in FIG. 14B includes a Saving Format Selection button SB61, a Resolution Selection button SB62, a Scanning Type Selection button SB63, the Screen Toggling button BT7, an OK button BT61, and a Cancel button BT62.

The Saving Format Selection button SB61 enables the user to select one of a plurality of choices for the format for saving an image file generated when an original document is scanned using the scanner function of the MFP 100. The Resolution Selection button SB62 enables the user to select one of a plurality of choices for the resolution of image data generated when an original document is read using the scanner function.

The Scanning Type Selection button SB63 enables the user to select one of a plurality of choices for the number of colors in the image data generated when an original document is scanned with the scanner function. The Screen Toggling button BT7 enables the user to switch the operation screen displayed on the LCD 17 to the UI for the sighted user.

The OK button BT61 accepts the settings for the saving format, resolution, and number of colors for the image data and issues an instruction to begin scanning the document. When the OK button BT61 is pressed, the original document placed on the scanning surface of the MFP 100 is scanned based on the settings selected with the selection buttons SB61-SB63 to generate image data. The Cancel button BT62 functions to close the scanner function operation screen displayed on the LCD 17, without performing the scanning operation.

As described above, if the user presses the Scan button BT2 while the UI for the visually impaired user is displayed on the LCD 17, the CPU 11 displays the scanner function operation screen on the LCD 17 and further displays the Screen Toggling button BT7 in a display region of the scanner function operation screen.

The above description is merely one example for displaying the scanner function operation screen on the LCD 17 when the Scan button BT2 is pressed. Similar operation screens for other functions are displayed on the LCD 17 when the corresponding buttons BT1-BT11 (excluding the Screen Toggling button BT7) are pressed, but a description of these operation screens will not be provided.

Through the function execution process A shown in FIG. 13A, the CPU 11 can display an operation screen for the function corresponding to the button BT1-BT11 (excluding the Screen Toggling button BT7) pressed by the user in the UI for the visually impaired user and can further display the Screen Toggling button BT7 in a display region of the function's operation screen.

Hence, regardless of which operation screen is displayed, a sighted user can simply select the Screen Toggling button BT7 to switch the UI for the visually impaired user displayed on the LCD 17 to the UI for the sighted user, making this configuration convenient to a sighted user.

Further, if the display on the LCD 17 is cluttered with numerous windows, including operation screens for other programs in addition to the UI for the visually impaired user and operation screens for other functions, the sighted user can still easily find the Screen Toggling button BT7 simply by finding one of the UI for the visually impaired user and the operation screens for the functions. Hence, the sighted user can easily switch the UI for the visually impaired user to the UI for the sighted user, even when the display on the LCD 17 is cluttered, thereby making this configuration convenient to the sighted user.

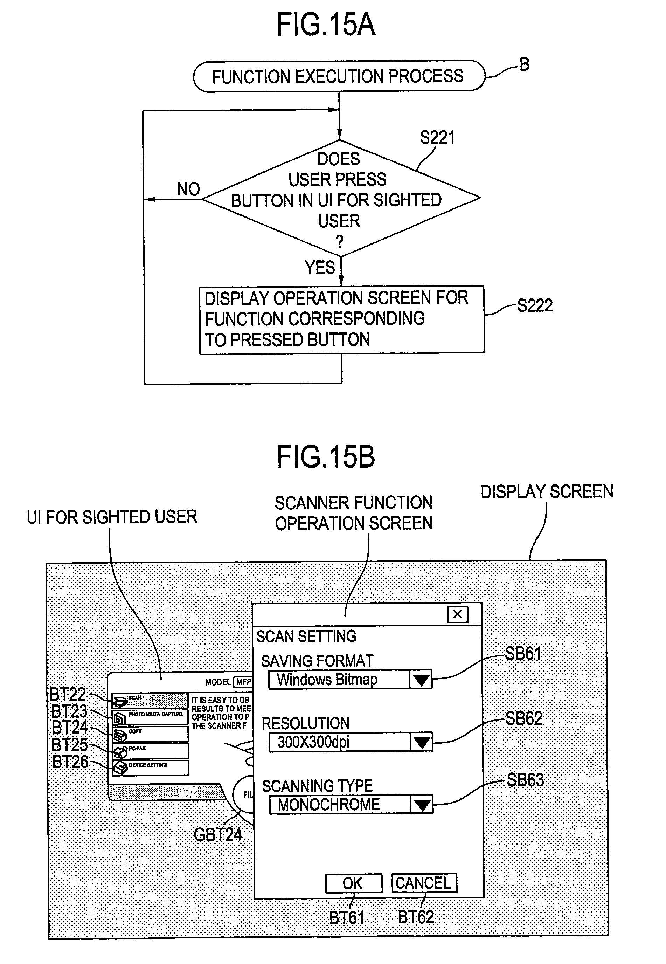

Next, a function execution process B in the second embodiment will be described. FIG. 15A is a flowchart illustrating steps in the function execution process B.

The function execution process is a process to display the operation screen for a function corresponding to one of the buttons BT21-BT26 or graphical buttons GBT21-GBT24 on the LCD 17 when the user selects this button in the UI for the sighted user displayed on the LCD 17. The function execution process B is repeatedly executed by the PC 101 while the application program X is running. This application programs performing the function execution process B is stored in the application program X memory area 14c, for example.

In S221 of the function execution process, the CPU 11 determines whether the user presses one of the buttons BT21-BT26 or graphical buttons GBT21-GBT24 in the UI for the sighted user. The CPU 11 continues to wait while one of these buttons has not been pressed (S221: NO). When one of the buttons is pressed (S221: YES), in S222 the CPU 11 displays the operation screen for the function corresponding to the pressed button on the LCD 17.

Specifically, the CPU 11 acquires a window from the OS and displays the operation screen for the function corresponding to the pressed button in the acquired window. Subsequently, the CPU 11 returns to S381 and repeats the process in S221-S222.

For example, if the user selects the Scan button BT22 with the keyboard 15 or the mouse 16 when the UI for the sighted user is displayed on the LCD 17, the CPU 11 displays the scanner function operation screen on the LCD 17 for using the scanner function of the MFP 100. However, the Screen Toggling button BT7 is not displayed in this operation screen.

FIG. 15B is a screenshot showing an example of the scanner function operation screen displayed on the LCD 17 when the user selects the Scan button BT22 in the UI for the sighted user. In the example of FIG. 14B, the scanner function operation screen is provided with the Saving Format Selection button SB61, the Resolution Selection button SB62, the Scanning Type Selection button SB63, the OK button BT61, and the Cancel button BT62. The selection buttons SB61-SB63 and the buttons BT61 and BT62 are identical to those in FIG. 13B and, therefore, a description of these buttons will not be repeated.

As shown in FIG. 15B, only the scanner function operation screen is displayed on the LCD 17 when the user selects the Scan button BT22 in the UI for the sighted user. The Screen Toggling button BT7 is not displayed.

The above description is merely one example of a scanner function operation screen displayed on the LCD 17 when the Scan button BT22 is pressed. Operation screens for other functions are similarly displayed on the LCD 17 when one of the other buttons BT21-BT26 or graphical buttons GBT21-GBT24 is pressed, but a description of these operation screens will not be provided.

Through the function execution process B shown in FIG. 15A, the CPU 11 can display an operation screen for a function corresponding to one of the buttons BT21-BT26 and graphical buttons GBT21-GBT24 when the user presses this button in the UI for the sighted user displayed on the LCD 17.

In the second embodiment described above, when the user presses one of the buttons BT1-BT11 (excluding the Screen Toggling button BT7) in the UI for the visually impaired user displayed on the LCD 17, the CPU 11 displays the operation screen for the function corresponding to the pressed button on the LCD 17, and further displays the Screen Toggling button BT7 in a display region of the function's operation screen. Accordingly, a sighted user can easily switch the UI for the visually impaired user to the UI for the sighted by operating the Screen Toggling button BT7 in an operation screen for any function. Hence, this configuration is user-friendly for a sighted user.

Further, if the display on the LCD 17 is cluttered with numerous windows, including operation screens for other programs in addition to the UI for the visually impaired user and operation screens for other functions, the sighted user can still easily find the Screen Toggling button BT7 simply by finding one of the UI for the visually impaired user and the operation screens for the functions. Hence, the sighted user can easily switch the UI for the visually impaired user to the UI for the sighted user, even when the display on the LCD 17 is cluttered, thereby making this configuration convenient to a sighted user.

Next, a PC 1001 according to a third embodiment will be described. In the third embodiment, an application program Y and a launcher program are installed on a PC 1001. The application program Y has an operation screen for visually impaired users and an operation screen for sighted users. The launcher program functions to launch the application program Y. When running, the launcher program determines whether the user of the PC 1001 is a visually impaired user or a sighted user. Next, when the user issues an instruction to launch the application program Y, the launcher program commands the application program Y to display the operation screen best suited to the user.

For example, if a visually impaired user issues an instruction to launch the application program Y, which has a plurality of operation screens, while the launcher program described above is running on the PC 1001, the launcher program launches the application program Y so that the application program Y displays on the LCD 17 the operation screen most convenient to the visually impaired user. Accordingly, this configuration is user-friendly to visually impaired users for which each operation is time-consuming.

First, the configuration of the PC 1001 according to the third embodiment will be described.

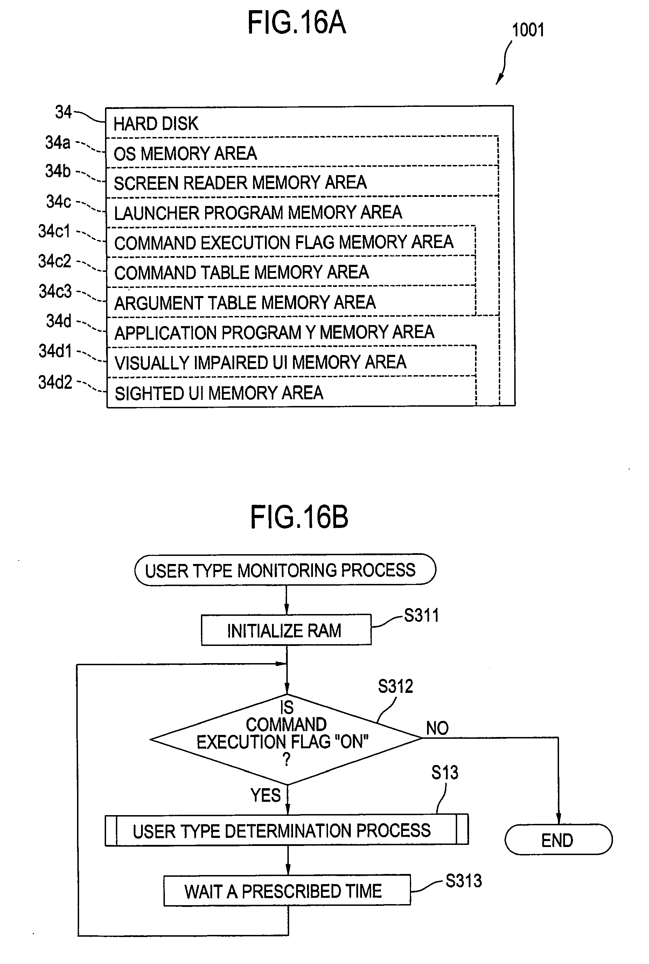

FIG. 16A is a block diagram showing the electrical structure of a hard disk 34 provided in the PC 1001. Since the electrical structure of the PC 1001 is identical to that of the PC 1 according to the first embodiment (see FIG. 1) except for the hard disk 34, only the structure of the hard disk 34 will be described here.

The hard disk 34 is a rewritable, non-volatile memory capable of preserving data even after the power supply to the PC 31 is turned off. The hard disk 34 is provided with an OS memory area 34a, a screen reader memory area 34b, a launcher program memory area 34c, and an application program Y memory area 34d.

The OS memory area 34a has the same configuration as the OS memory area 14a described in the first embodiment, and the screen reader memory area 34b has the same structure as the screen reader memory area 14b described in the first embodiment. Therefore, a description of these memory areas will not be repeated here.

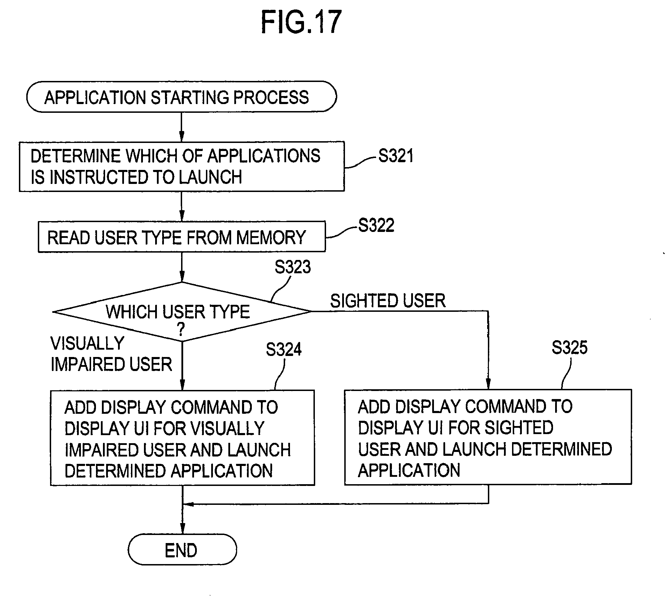

The launcher program memory area 34c stores the launcher program, which functions to launch a program when the user issues an instruction to start the program, and to command the program to display the operation screen best suited to the user. The launcher program memory area 34c stores programs for implementing a user type monitoring process shown in FIG. 16B, and an application starting process illustrated in the flowchart of FIG. 17.

The launcher program memory area 34c is also provided with a command execution flag memory area 34c1, a command table memory area 34c2, and an argument table memory area 34c3.

The command execution flag memory area 34c1 stores a command execution flag indicating whether to launch a program and to command the program to display the operation screen best suited to the user when the user issues an instruction to execute the program. The launcher program launches a program for which the user has issued an instruction to start and commands the program to display the operation screen best suited to the user when the command execution flag is set to "on" ("1" in the third embodiment).

However, the launcher program simply launches the program for which the user has issued an instruction to start when the command execution flag is set to "off" ("0" in the third embodiment). In this case, the program displays a prescribed operation screen set as a default screen (the UI for the sighted user, for example). The user may be prompted to set the command execution flag to "on" or "off" when a monitoring program is installed on the hard disk 34, or may be allowed to set the flag to "on" or "off" through operations on the keyboard 15, mouse 16, or the like.

The command table memory area 34c2 stores a command for launching the application program Y. The argument table memory area 34c3 stores a display command (command option or command argument) commanding the application program Y to display the UI for the visually impaired user on the LCD 17 and a display command commanding the application program Y to display the UI for the sighted user on the LCD 17 when the application program Y is launched.

When a display command is inputted into the OS after a command instructing the OS to launch the application program Y, the OS starts the application program Y. When the application program Y begins executing, the CPU 11 displays the UI for the visually impaired user or the UI for the sighted user on the LCD 17 as commanded by the display command.

The application program Y memory area 34d stores the application program Y, which is a program that can run on the PC 1001. The application program Y may be the application program X described in the first embodiment, for example. The application program Y memory area 34d is provided with a visually impaired UI memory area 34d1, and a sighted UI memory area 34d2.

The visually impaired UI memory area 34d1 stores a UI for the visually impaired user, which is an operation screen for facilitating a visually impaired user in performing input operations. For example, the visually impaired UI memory area 34d1 stores the UI for the visually impaired user shown in FIG. 2A. The sighted UI memory area 34d2 stores a UI for the sighted user, which is an operation screen facilitating a sighted user in input operations. For example, the sighted UI memory area 34d2 stores the UI for the sighted user shown in FIG. 2B.

Next, a user type monitoring process executed by the CPU 11 of the PC 1001 will be described with reference to FIG. 16B.

FIG. 16B is a flowchart illustrating steps in the user type monitoring process. This process is performed to monitor the operator of the PC 31 to determine whether the user is visually impaired or sighted based on user settings for the PC 1001, and characteristics of the user's input operations.

In S311 of the user type monitoring process, the CPU 11 initializes the condition conformity flag memory area 13a of the RAM 13 (FIG. 1). Specifically, the CPU 11 stores the user type indicating a sighted user ("2" in the third embodiment) in the user type memory area 13h (FIG. 1).

In S312 the CPU 11 determines whether the command execution flag stored in the command execution flag memory area 34c1 is set to "on." If the command execution flag is set to "on" (S312: YES), in S13 the CPU 11 executes the user type determination process shown in FIG. 5. In S313 the CPU 11 waits a prescribed time (10 minutes, for example) and subsequently returns to S312 to repeat the process in S312-S313 described above. If the CPU 11 determines in S312 that the command execution flag is "off" (S312: NO), the CPU 11 ends the user type monitoring process.

Further, the CPU 11 of PC 1001 may perform to display the operation screen best suited to the user when the user issues an instruction to start and to command. For example, the CPU 11 may perform an application starting process shown in FIG. 17.

FIG. 17 is a flowchart illustrating steps in the application starting process. This process is performed to launch a program when the user issues an instruction to start the program and to command the program to display the operation screen best suited to the user.

In S321 the CPU 11 determines which of the applications stored on the hard disk 34 is instructed to launch. In this description, it will be assumed that the application program Y has been instructed to launch. In S322 the CPU 11 reads the user type stored in the user type memory area 13h (FIG. 1), and in S323 determines the type of user specified by the user type.

If the user type indicates a visually impaired user, then in S324 the CPU 11 adds a display command (command option) to display the UI for the visually impaired user on the LCD 17 to the execution command for the application program Y and inputs this command into the OS to launch the application program Y. Subsequently, the CPU 11 ends the application starting process.

However, if the user type indicates a sighted user, in S325 the CPU 11 adds a display command (command option) for displaying the UI for the sighted user on the LCD 17 to the execution command for the application program Y and inputs this command into the OS to launch the application program Y. Subsequently, the CPU 11 ends the application starting process.

Through the application starting process described in FIG. 17, the CPU 11 can launch a program when the user issues an instruction to start the program and can command the program to display the operation screen most convenient for the user.

As described above, when the launcher program according to the third embodiment is running on the PC 1001, the CPU 11 can determine whether the user of the PC 1001 is a visually impaired user or a sighted user based on user settings for the PC 1001 and characteristics of the user's input operations and can launch a program on the PC 1001 while commanding the program to display the operation screen best suited to the user when the user issues an instruction to start the program. Hence, if a visually impaired user issues an instruction to launch a program, the program's UI for the visually impaired user is displayed on the LCD 17, making this configuration user-friendly for visually impaired users. Further, if a sighted user issues an instruction to launch a program, the program's UI for the sighted user is displayed on the LCD 17, making this configuration user-friendly for sighted users.

While the invention has been described in detail with reference to above the embodiments and variations thereof, it would be apparent to those skilled in the art that various changes and modifications may be made therein without departing from the spirit of the invention.

For example, each of the variations of the first embodiment described above (the usage status acquisition process, the operation acquisition processes, and the user type determination processes) can also be applied to the second and third embodiments.

Further, in the usage status acquisition process according to the first variation of the first embodiment (FIG. 10), the CPU 11 determines that settings for the PC 1 have been established to facilitate a visually impaired user if more than two conditions are met in the determination steps (S92, S94, S96, and S98). However, the CPU 11 may determine that the settings for the PC 1 have been established for a visually impaired user if at least one of the conditions is met. Further, in determination steps of S51 (FIG. 6) and S96 (FIG. 10) the CPU 11 may determine whether a screen reader has been set for converting text data on the LCD 17 to voice, or whether setting for starting the screen reader has been set as the OS setting. In this case, the screen reader memory area 14b may store settings for determining whether or not the screen reader converts text data to voice automatically, and OS memory area may store settings for determining whether or not the screen reader is started.

In the first embodiment described above, the operation screen of the application program X is toggled to the UI for the visually impaired user or the UI for the sighted user. However, when a plurality of application programs having a UI for the visually impaired user and a UI for the sighted user are stored on the hard disk 14 or the like and are running on the PC 1, the operation screen of each application program may be toggled.

Further, the process according to the third embodiment uses the example of launching the application program Y. However, if a plurality of application programs having a UI for the visually impaired user and a UI for the sighted user are stored on the hard disk 34 when an instruction to launch each application program is issued, the CPU 11 may launch the corresponding application program while issuing a command to display the operation screen best suited to the user. In this case, a command is stored in the command table memory area 34c2 for instructing the launch of each application program stored on the hard disk 34, and display commands (command options) are stored in the launcher program memory area 34c for commanding each application program to display the UI for the visually impaired user on the LCD 17 and for commanding each application program to display the UI for the sighted user on the LCD 17.

Further, while a mouse is used as an example of a pointing device in the embodiments and variations, any device capable of specifying the display position of a cursor may be used, such as a touch panel, track ball, or track pad.

Further, when the dialog box is displayed on the LCD 17 in the screen toggling process B (FIG. 8), the CPU 11 may determine that the NO button BT52 is pressed if an input operation on the YES button BT51 or NO button BT52 is not received within a prescribed time after the dialog box was displayed.

In the user type determination process (FIG. 5), the CPU 11 counts the number of times specific keys are pressed, but any keys may be counted, provided such keys are commonly used in the application program X and the OS.

## Claims

1. A data processing device comprising:
a displaying unit that is configured to display display data including first display data for visually impaired users and second display data for sighted users;
a user type determining unit that is configured to determine whether a user is visually impaired or sighted; and
a display controlling unit that is configured to control the displaying unit to display the first display data when the user type determining unit determines that the user is visually impaired, and to display the second display data when the user type determining unit determines that the user is sighted.

2. The data processing device according to claim 1,
wherein an operation system and a screen reader are installed on the data processing device;
wherein the data processing device further comprises:
a first memory that can store settings of the operation system; and
a second memory that can store settings of the screen reader,
wherein the user type determining unit is configured to determine whether the user is visually impaired or sighted based on at least one of the settings of the operation system and the settings of the screen reader.

3. The data processing device according to claim 1 or 2, wherein a screen reader is capable of being installed in the data processing device, and
wherein the user type determining unit is configured to determine that user is visually impaired when the screen reader has been installed on the data processing device.

4. The data processing device according to claim 1, 2 or 3, further comprising a pointing unit having a moving member with which a user can move a pointer and specify a display position of the pointer on the displaying unit, and a button with which a user can input user data corresponding to the display position of the pointer;
wherein the display data includes character;
wherein the operation system is configured to control a moving speed of the pointer and a size of the character displayed on the displaying unit,
wherein the user type determining unit is configured to determine that the user is visually impaired when at least two of the following condition are met, (a) the screen reader is installed, (b) the screen reader is being executed, (c) moving speed of pointer is set slower than a default moving speed of the pointer that is preset in the operation system; (d) the size of character is set larger than a default size of the character that is preset in the operation system.

5. The data processing device according to claim 1, 2 or 3, further comprising an inputting unit with which a user can input user data; and an input state determining unit that is configured to determine input state, and
wherein the user type determining unit is configured to determine whether the user is visually impaired or sighted based on the input state.

6. The data processing device according to claim 5,
wherein the inputting unit comprises:
a pointing unit having a moving member with which a user can move a pointer and specify a display position of the pointer on the displaying unit, and a button with which a user can input the user data corresponding to the display position of the pointer; and
a key inputting unit having a plurality of keys with which a user can input the user data, and wherein at least one of:
the user type determining unit is configured to determine that the user is visually impaired when the input state determining unit determines that the plurality of keys are pushed more than a first prescribed times;
the user type determining unit is configured to determine that the user is sighted when the input state determining unit determines that the button is pushed more than a second prescribed times;
the device further comprises a third memory that can store a point inputting program that is mainly operated with the pointing unit, thereby inputting the user data, and the user type determining unit is configured to determine that the user is visually impaired when the input state determining unit determines that the point inputting program is operated with the key inputting unit; and
the device further comprises a fourth memory that can store a key inputting program that is mainly operated with the key inputting unit, thereby inputting the user data, and the user type determining unit fails to determine whether the user is visually impaired or sighted when the input state determining unit determines that the key inputting program is operated with the key inputting unit.

7. The data processing device according to claim 1, further comprising:
a connector connectable to a voice outputting unit that outputs a voice;
a voice controlling unit that controls the voice outputting unit to output a voice asking the user whether or not to display the first display data, when the user type determining unit determines that the user is visually impaired.

8. The data processing device according to claim 7, further comprising:
a key inputting unit having a plurality of keys with which a user can input data; and
a pointing unit having a moving member with which a user can move a pointer and specify a display position of the pointer on the displaying unit, and a button with which a user can input the user data corresponding to the display position of the pointer, and wherein at least one of:
the display controlling unit is configured to control the displaying unit to display the first display data when the input data for instructing to display the first display data is inputted with the key inputting unit after the voice outputting unit outputs a voice; and
the display controlling unit is configured to control the displaying unit to display an asking display asking the user whether or not to display the second display data when the user type determining unit determines that the user is sighted, and the display controlling unit is configured to control to display the second display data when the data is inputted with the pointing unit.

9. The data processing device according to claim 1, further comprising:
a user type storing unit that stores user type data that indicates whether the user is visually impaired or sighted and is determined by the user type determining unit; and
a startup settings setting unit that is configured to set startup settings based on the user type data,
wherein a two-way displaying program is installed on the data processing device and capable of controlling the displaying unit to display one of the first display data and the second display data in accordance with the startup settings, and
wherein the display controlling unit is configured to control, via the two-way displaying program, the displaying unit to display one of the first display data and the second display data in accordance with the startup settings when the two-way displaying program is started.

10. The data processing device according to claim 9,
wherein a plurality of programs are installed on the data processing device,
wherein the data processing device further comprises:
a pointing unit having a moving member with which a user can move a pointer and specify a display position of the pointer on the displaying unit, and a button with which a user can input the user data corresponding to the display position of the pointer; and
a key inputting unit having a plurality of keys with which a user can input user data, and
wherein the user type determining unit is configured to determine whether the user is visually impaired or sighted based on the user data inputted with the inputting unit for the two-way displaying program.

11. The data processing device according to claim 1,
wherein the display controlling unit is configured to control the displaying unit to further display request data asking the user whether to switch display data on the displaying unit from the first display data to the second display data when the displaying unit displays the first display data, and
wherein the display controlling unit is configured to control the displaying unit to display the second display data when a user instructs, based on the display request data, to switch the first display data to the second display data.

12. The data processing device according to claim 11, further comprising a pointing unit with which a user can move a pointer to specify a display position on the displaying unit, and
wherein the display controlling unit is configured to control the displaying unit to display the second display data when the user specifies the request data with the pointing unit.

13. A data processing method comprising:
determining whether a user is visually impaired or sighted; and
displaying first display data for visually impaired users when the user is determined to be visually impaired, and second display data for sighted users when the user is determined to be sighted.

14. A computer-readable recording medium that stores a data processing program, the data processing program comprising instructions for:
determining whether a user is visually impaired or sighted; and
displaying first display data for visually impaired users when the user is determined to be visually impaired, and second display data for sighted users when the user is determined to be sighted.

15. A data processing system comprising:
a first data processing device comprising a displaying unit that is configured to display display data including first display data for visually impaired users and second display data for sighted users; and
a second data processing device comprising:
a user type determining unit that is configured to determine whether a user is visually impaired or sighted; and
a display controlling unit that is configured to control the displaying unit to display the first display data when the user type determining unit determines that the user is visually impaired, and to display the second display data when the user type determining unit determines that the user is sighted.
